# EUROPEAN PATENT APPLICATION

(11) **EP 1 179 913 A1**
(43) Date of publication of application: **13.02.2002**
(21) Application number: 01914165.4
(22) Date of filing: 13.03.2001
(51) Int. Cl.: H04L 12/18, G06F 13/00, H04M 3/56

(54) **COMMUNICATION CONTROL DEVICE AND METHOD THEREFOR, COMMUNICATION DEVICE, COMMUNICATION SYSTEM AND METHOD THEREFOR, AND PROVIDING MEDIA THEREFOR**

(30) Priority: 16.03.2000 JP 2000079367; 17.03.2000 JP 2000081831; 19.10.2000 JP 2000319640
(71) Applicant: Sony Corporation, Tokyo 141-0001 (JP)
(72) Inventor: NARITA, Hideyuki, c/o SONY CORPORATION, Tokyo 141-0001 (JP); ITO, Yoshiyuki, c/o SONY CORPORATION, Tokyo 141-0001 (JP); TAKASHIMA, Masatoshi, c/o SONY CORPORATION, Tokyo 141-0001 (JP); MURAYAMA, Haruyoshi, c/o SONY CORPORATION, Tokyo 141-0001 (JP); HIRANAKA, Daisuke, c/o SONY CORPORATION, Tokyo 141-0001 (JP)
(74) Representative: Körber, Martin, Dipl.-Phys.
(86) International application number: JP0101929
(87) International publication number: WO0169854

(57) **Abstract**

A communication control apparatus having a server apparatus and able to simplify procedures and operations to attend party communication, wherein the server apparatus 103 receives information designating terminal apparatuses 105₂ to 105₄ and a request seeking that the designated communication apparatuses attend the multipoint communication via a communication circuit, outputs inquiries PAI if the designated terminals intend to attend the multipoint communication via the communication circuit, and when receiving an answer PAA from the designated terminal apparatuses that they will attend said multipoint communication, controls the multipoint communication among a plurality of the terminal apparatuses including the designated communication apparatuses.

## Description

### TECHNICAL FIELD

The present invention relates to an apparatus and a method for communication control used for multipoint communication via communication lines, a communication apparatus, a system and a method for communication, and a medium for providing the same.

### BACKGROUND ART

Recently, due to the technical advances made in communications and computers, multipoint communication (party communication) wherein a plurality of users communicate among each other is becoming possible without users buying large-scale expensive systems such as TV conference systems by connecting cameras and microphones to personal computers at their homes and transmitting moving pictures and speech in real time among the plurality of personal computers via a network.

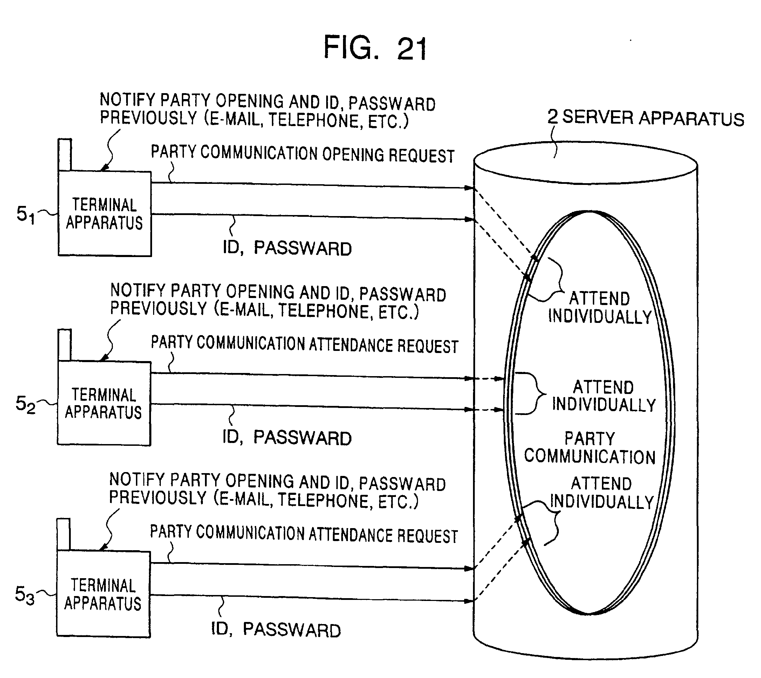

In such a multipoint communication system for multipoint communication, for example, as shown in FIG. 21, for example, a user sponsoring the multipoint communication operates a terminal apparatus 5₁ to send a party communication opening request to a server apparatus 2, obtains an ID of the opened party communication from the server apparatus 2, and designates a password.

Further, the sponsor of the party communication calls upon the other users by e-mail, telephone, etc. to attend the party communication and at that time notifies them of the ID and the password of the party communication.

The other users access the server apparatus 2 from terminal apparatuses 5₂ and 5₃ by using the ID and the password of the party communication obtained from the sponsor when attending the party communication. The server apparatus 2 verifies the password and provides the terminal apparatuses 5₂ and 5₃ of the approved users the party communication service.

However, the above conventional multipoint communication system has the following main problems.

A first problem is that the sponsor of the party communication has to call upon the other users to attend the party communication by e-mail, telephone, etc. and notify them of the ID and the password of the party communication. This is troublesome.

A second problem is that in the above conventional multipoint communication system, a user who knows the ID and the password of the party communication can attend the party communication unconditionally and therefore security is not sufficiently ensured.

A third problem is that in the above conventional multipoint communication system, when attending the party communication, the users called upon to attend the party communication by the sponsor have to operate operation keys etc. to input into the terminal apparatuses 5₂ and 5₃ the ID and the password of the party communication notified to them in advance by the sponsor so as to access the server apparatus 2. This is troublesome.

A fourth problem is that it is not possible to notify interested users in real time of dynamically changing and dynamically appearing or disappearing information such as the opening or content of party communication using communication lines.

A fifth problem is that when monitoring information such as the content of party communication by some sort of means and using it as a means for providing information, it is not possible to deliberately disable the monitoring of information which a user does not want to be monitored in order to protect privacy.

A sixth problem is that when the attendants and the sponsor of the party communication differ, it is not possible to have not the attendants, but the sponsor side to control the information forming the key for notification to registered users.

A seventh problem is that when notifying party information to nonattendants in the party communication, it is not possible to prevent it from being notified users to whom the party attendants or the party sponsor do not intend.

### DISCLOSURE OF THE INVENTION

The present invention was made in consideration of this situation and has as first object to provide a communication system and method enabling dynamically changing party information to be notified in real time to users not attending the party, but interested in the information, and a medium for provision of the same.

Further, a second object of the present invention is to provide a communication control apparatus and method enabling simplification of the procedure and operation for attending party communication and a medium for provision and communication apparatus for the same.

Further, a third object of the present invention is to provide a communication control apparatus and method enabling an improvement of security of attendance in party communication and a communication system and method and medium for provision and communication apparatus for the same.

Further, a fourth object of the present invention is to provide a communication system and method enabling the authority to notify party information to be given to the party attendants and users having that authority other than the attendants and enabling these to be suitably changed and a medium for provision of the same.

Further, a fifth object of the present invention is to provide a communication system and method enabling notification of party information to party attendants or users within a scope intended by the party sponsor and a medium for provision of the same.

In order to solve the above problems of the prior art and achieve the above objects, a communication control apparatus of a first aspect of the invention is a communication control apparatus for controlling multipoint communication conducted using a plurality of communication apparatuses connected via a communication circuit, comprising a request processing means for inquiring to a designated communication apparatus whether it intends to attend multipoint communication when receiving information designating that communication apparatus and a request seeking the attendance of that designated communication apparatus in the multipoint communication and a communication control means for controlling the multipoint communication among the plurality of communication apparatuses including the designated communication apparatus when receiving an answer from the designated communication apparatus to the effect of attending the multipoint communication.

The action of the communication control apparatus of the first aspect of the invention is as follows.

A certain communication apparatus sends to the communication control apparatus of the present invention information designating a communication apparatus and a request seeking that the designated communication apparatus attend multipoint communication.

When the communication control apparatus of the present invention receives the request, the request processing means inquires to the designated communication apparatus whether it intends to attend the multipoint communication.

Further, when receiving from the designated communication apparatus an answer to the effect that it will attend the multipoint communication, the communication control means controls the multipoint communication among the plurality of the communication apparatuses including the designated communication apparatus.

In this way, according to the communication control apparatus of the present invention, since it inquires to a designated other communication apparatus whether it intends to attend the multipoint communication in response to a request from a certain communication apparatus and conducts the multipoint communication for the designated communication apparatus in response to the answer, there is no need for negotiation among the users of the communication apparatuses.

Further, in the communication control apparatus of the first aspect of the invention, preferably the request processing means notifies the communication apparatus issuing the request that it has received an answer from the designated communication apparatus to the effect of refusing to attend the multipoint communication when receiving the same.

Further, in the communication control apparatus of the first aspect of the invention, preferably the request processing means notifies the communication apparatus issuing an answer to the effect of refusing to attend the multipoint communication of at least one of a state of said multipoint communication and content of the conversation at a predetermined timing.

Still further, in the communication control apparatus of the first aspect of the invention, preferably the request processing means notifies the apparatus when at least one of the attendants in the multipoint communication and content of communication changes.

Further, in the communication control apparatus of the first aspect of the invention, preferably the request processing means sends information about at least one of the attendants in the multipoint communication, the content of the conversation, a charging method, and time to the designated communication apparatus when making the inquiry.

Alternatively, in the communication control apparatus of the first aspect of the invention, preferably the request processing means sends information necessary for the designated communication apparatus to attend the multipoint communication to the designated communication apparatus.

Here, the information necessary for attendance in the multipoint communication is information identifying the multipoint communication and a password.

Further, in the communication control apparatus of the first aspect of the invention, preferably the communication control means controls data transmitted from the plurality of communication apparatuses engaged in the multipoint communication to be received by other communication apparatuses other than the communication apparatuses transmitting the data.

Alternatively, in the communication control apparatus of the first aspect of the invention, preferably the request processing means inquires to the communication apparatus designated by a request whether it intends to attend the multipoint communication when receiving a request seeking opening of multipoint communication, and the communication control means starts control of the multipoint communication by the plurality of communication apparatuses including the designated communication apparatus when receiving an answer from that communication apparatus to the effect that it will attend the multipoint communication.

Alternatively, in the communication control apparatus of the first aspect of the invention, preferably the request processing means instructs the communication control means to break the connection of the multipoint communication when receiving a request seeking the same from a communication apparatus attending the multipoint communication, and the communication control means controls the multipoint communication by the plurality of communication apparatus other than the communication apparatus requesting the disconnection from among the plurality of communication apparatuses attending the multipoint communication in response to the command from the request processing means.

Further, the communication apparatus of a second aspect of the invention is a communication apparatus used for multipoint communication with other communication apparatuses connected via communication circuit, which receives an inquiry as to if it intends to attend the multipoint communication together with information necessary to connect to the multipoint communication from the communication control apparatus controlling the multipoint communication and automatically accesses the communication control apparatus using the necessary information when receiving a command to the effect of attending the multipoint communication.

Since the communication apparatus of the first aspect of the invention accesses the communication control apparatus automatically, it is possible to lighten the load in inputting the information necessary for the user to connect to the multipoint communication.

Further, the communication apparatus of the second aspect of the invention preferably receives information identifying the multipoint communication and a password as the information necessary to connect to the multipoint communication and uses the same to automatically access the communication control apparatus.

Further, the communication control method of a third aspect of the invention is a communication control method for controlling multipoint communication conducted using a plurality of communication apparatuses connected via communication circuit, comprising inquiring to a designated communication apparatus whether it intends to attend the multipoint communication when there is information designating a communication apparatus and a request seeking the designated communication apparatus to attend the multipoint communication and controlling the multipoint communication among the plurality of communication apparatuses including the designated communication apparatus when the designated apparatus gives an answer to the effect of attending the multipoint communication.

Further, the communication control method of the third aspect of the invention preferably further comprises notifying the communication apparatus issuing the request that the designated communication apparatus has given an answer to the effect of refusing to attend the multipoint communication when that is the case.

Further, the provision medium of a fourth aspect of the invention is a provision medium for providing a program describing a routine for controlling multipoint communication conducted using a plurality of communication apparatuses connected via communication circuit, wherein the program describes a routine for inquiring to a designated communication apparatus whether it intends to attend the multipoint communication when there is information designating that communication apparatus and a request seeking that the designated communication apparatus attend the multipoint communication and a routine for controlling the multipoint communication among the plurality of communication apparatuses including the designated communication apparatus process when the designated communication apparatus gives an answer to the effect of attending the multipoint communication.

The communication system of a fifth aspect of the invention comprises a communication line; a plurality of terminal apparatuses each comprising at least a keyword input means for inputting a keyword and communicating with each other via the communication circuit so as to engage in multipoint communication; and a server comprising a keyword extracting means for receiving data including a keyword input by a terminal apparatus and extracting the keyword from the received data, a user database in which user information is registered, a user extracting means for comparing a keyword extracted by the keyword extracting means with the user information registered in the user database and extracting at least one corresponding user, and a transmitting means for transmitting information about the multipoint communication to the users extracted by the user extracting means.

Further, in the fifth aspect of the invention, each terminal apparatus comprises a speech input means, the keyword input means includes a speech input means, and the keyword extracting means of the server includes a means for extracting a keyword from speech transmitted from the terminal apparatus.

Alternatively, in the fifth aspect of the invention, the keyword extracting means includes a speech-text converting unit for converting speech to text; a speech database for saving speech data converted in the speech-text converter; and a keyword extracting unit for extracting a keyword based on speech data converted in the speech-text converting unit and data stored in the speech database.

Further, in the fifth aspect of the invention, the speech-text converting unit stores in the speech database only the speech data relating to a predetermined portion instructed by the terminal apparatus.

Alternatively, in the fifth aspect of the invention, the speech-text converting unit counts the frequency of use of each word in the data converted to the text and stores the frequency of use and the word data in the speech database.

Alternatively, in the fifth aspect of the invention, the speech-text converting unit counts the total number of words stored in the speech database and stores the words in the conversation and their frequency to an extent by which the total number of words does not exceed a predetermined range.

Further, in the fifth aspect of the invention, the server further comprises a related word memory in which words related to keywords are registered and the keyword extracting unit extracts a keyword based on a word related to the keyword registered in the related word memory in addition to the speech data and the data stored in the speech database when the total number of words does not exceed the predetermined range.

Further, in the fifth aspect of the invention, the keyword extracting means extracts word data having a high frequency of use from conversation data stored in the speech database when the total number of words exceeds the predetermined range, compares the extracted word data with the word data related to the keyword registered in the related word memory to extract at least one related word, and clears the speech database and the total number of words after extracting the related word.

Further, the fifth aspect of the invention further comprises an external control terminal connected to the server, and the server receives as input only a keyword from the terminals attending the multipoint communication and particularly approved terminals not attending the multipoint communication or the external control terminal connected to the server.

Alternatively, the fifth aspect of the invention further comprises an external control terminal connected to the server, and terminals attending the multipoint communication and particularly approved terminals not attending the multipoint communication or the external control terminal connected to the server transmit to the server information for restricting other terminals sending information about the multipoint communication.

Further, in the fifth aspect of the invention, the information about the multipoint communication includes at least one of a theme of multipoint communication, a number of attendants, a charging method, an access point, and a list of the attendants.

Further, the communication method of a sixth present invention is a communication method where a plurality of terminal apparatuses communicate with each other via communication lines for multipoint communication, comprising a step of receiving data including a keyword transmitted from a terminal apparatus and extracting the keyword from the received data; a step of comparing the extracted keyword with previously registered user information and extracting at least one corresponding user; and a step of transmitting information about the multipoint communication to the extracted user.

Further, in the sixth aspect of the invention, the step for extracting the keyword extracts the keyword in speech sent from the terminal apparatus.

Further, in the sixth aspect of the invention, the step for extracting the keyword is comprised of a step of converting speech to text; a step of storing the speech data converted to text; and a step of extracting the keyword based on the converted speech data and the stored data.

Further, in the sixth aspect of the invention, the step of storing the speech data stores only the speech data related to a predetermined portion instructed by the terminal apparatus.

Alternatively, in the sixth aspect of the invention, the step of storing the speech data counts the frequency of use for each word in the data converted to text and stores the frequency of use and word data.

Further, in the sixth aspect of the invention, the step of storing the speech data counts the stored total number of words and stores the words in conversation and their frequency of use to an extent by which the total number of words does not exceed a predetermined range.

Further, in the sixth aspect of the invention, the step of extracting the keyword extracts a keyword based on a word related to the keyword registered in advance in addition to the converted speech data and the stored data when the total number of words does not exceed the predetermined range.

Alternatively, in the sixth aspect of the invention, the step of extracting the keyword is comprised of the step of extracting word data having a high frequency of use from stored conversation data when the total number of words exceeds the predetermined range, a step of comparing the extracted word data with the word data related to the registered keyword to extract at least one related word, and a step of clearing the stored speech data and the total number of words after extracting the related word.

Further, a provision medium of a seventh aspect of the invention provides a program for making a computer execute a step of receiving data including a keyword transmitted from a terminal apparatus engaged in multipoint communication by communicating through a communication circuit and extracting the keyword from the received data; a step of comparing the extracted keyword with previously registered user information and extracting at least one corresponding user; and a step of transmitting information about the multipoint communication to the extracted user.

Further, the seventh aspect of the invention provides a program where the step for extracting the keyword extracts the keyword in speech sent from the terminal apparatus.

Alternatively, the seventh aspect of the invention provides a program where the step for extracting the keyword includes a step of converting speech to text; a step of storing the speech data converted to text; and a step of extracting the keyword based on the converted speech data and the stored data.

Further, the seventh aspect of the invention provides a program where the step of storing the speech data stores only the speech data related to a predetermined portion instructed by the terminal apparatus.

Alternatively, the seventh aspect of the invention provides a program where the step of storing the speech data counts the frequency of use for each word in the data converted to text and stores the frequency of use and word data.

Further, the seventh aspect of the invention provides a program where the step of storing the speech data counts the stored total number of words and stores the words in conversation and their frequency of use to an extent by which the total number of words does not exceed a predetermined range.

Further, the seventh aspect of the invention provides a program where the step of extracting the keyword extracts a keyword based on a word related to the keyword registered in advance in addition to the converted speech data and the stored data when the total number of words does not exceed the predetermined range.

Alternatively, the seventh aspect of the invention provides a program where the step of extracting the keyword is comprised of the step of extracting word data having a high frequency of use from stored conversation data when the total number of words exceeds the predetermined range, a step of comparing the extracted word data with the word data related to the registered keyword to extract at least one related word, and a step of clearing the stored speech data and the total number of words after extracting the related word.

According to the present invention, an attendant for multipoint communication inputs the keyword to the terminal or extracts the keyword from the speech of the conversation. Thus, attendants for multipoint communication interested in information related to the keyword can be automatically solicited.

Further, the users registering their preferences etc. in advance obtain the information about the multipoint communication currently under way in which they are not attending and decide whether they will newly attend the multipoint communication.

Further, according to the present invention, the attendants in multipoint communication can converse after securing privacy among the attendants.

Further, according to the present invention, not only the attendants in the multipoint communication, but also persons not attending but having the authority to do so, for example, the sponsor of the multipoint communication, may input a keyword to solicit attendants.

Further, according to the present invention, the attendants in the multipoint communication and particularly approved terminals not attending the multipoint communication or an external control terminal connected to the server restrict other terminals sending multipoint communication information and prevent transmitting useless multipoint communication information not intended by the user inputting the keyword. Further, the information is transmitted to a certain range of targeted users.

### BRIEF DESCRIPTION OF THE DRAWINGS

FIG. 1 is a view of the overall configuration of a multipoint communication system of the present invention.
FIG. 2 is a view for explaining the basics of processing when opening party communication in the multipoint communication system shown in FIG. 1.
FIG. 3 is a block diagram of the functions of a server apparatus shown in FIG. 1.
FIG. 4 is a block diagram of the functions of a terminal apparatus shown in FIG. 1.
FIG. 5 is a schematic external view at a display apparatus side of a display of the terminal apparatus shown in FIG. 4 wherein the display shows an example of the screen after the start of party communication.
FIG. 6 shows the screen showing the time when inquiring about attendance in party communication shown in the display of the display apparatus of the terminal apparatus shown in FIG. 4.
FIG. 7 is a view for explaining information sent to a terminal apparatus from a server apparatus when inquiring about attendance in party communication in a first embodiment.
FIG. 8 is a flow chart showing processing of the server apparatus when there is a request inquiring about attendance in party communication from a terminal apparatus in the first embodiment.
FIG. 9 is a flow chart showing a continuation of the processing of the server apparatus when there is a request inquiring about attendance in party communication from the terminal apparatus in the first embodiment.
FIG. 10 is a view showing a flow of the information at the time of the processing shown in FIG. 8 and FIG. 9.
FIG. 11 is a flow chart showing processing of the server apparatus when there is a request for opening party communication from the terminal apparatus in the first embodiment.
FIG. 12 is a flow chart showing processing of the server apparatus when there is a party disconnect request from the terminal apparatus in the first embodiment.
FIG. 13 is a view showing a flow of the information at the time of the processing shown in FIG. 12.
FIG. 14 is a connection diagram showing the basics of a communication control system adopting a communication control method of a second embodiment of the present invention.
FIG. 15 is a view for explaining a basic connection mode between a server apparatus and terminal apparatuses according to the second embodiment of the present invention in a case accompanied with transfer of a keyword and explaining an operation for extracting the keyword in the server.
FIG. 16 is a view for further specifically explaining the function relating to extracting a keyword in the server apparatus according to the second embodiment of the present invention.
FIG. 17 is a block diagram showing a specific example of the configuration of the server apparatus according to the second embodiment of the present invention.
FIG. 18 is a view for explaining registered data in a related word memory of the server apparatus according to the second embodiment of the present invention.
FIG. 19 is a view for explaining registered data in a user data memory of the server apparatus according to the second embodiment of the present invention.
FIG. 20 is a flow chart for explaining the operation around the server apparatus according to the second embodiment of the present invention.
FIG. 21 is a view for illustrating a conventional multipoint communication system.

### BEST MODE FOR CARRYING OUT THE INVENTION

Below, embodiments of the present invention will be described.

### First Embodiment

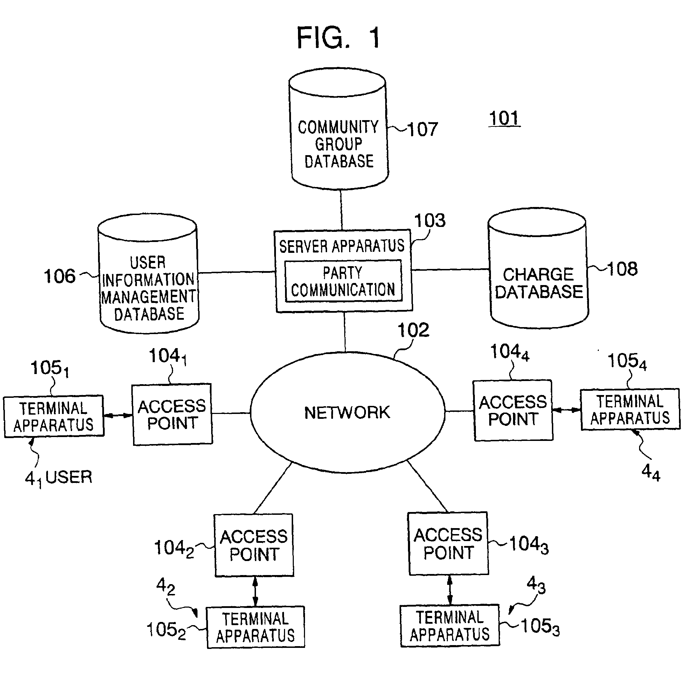

FIG. 1 is a view of the overall configuration of a multipoint communication system 101 of a first embodiment of the present invention.

As shown in FIG. 1, the multipoint communication system 101 comprises a server apparatus 103 and terminal apparatuses 105₁ to 105₄ connected via a network 102 and access points 104₁ to 104₄.

The first embodiment is an embodiment of the first to fourth aspects of the invention.

Further, the server apparatus 103 corresponds to a communication control apparatus of the present invention, while each of the terminal apparatuses 105₁ to 105₄ corresponds to a communication apparatus of the present invention.

Note that FIG. 1 illustrates a case where the terminal apparatuses 105₁ to 105₄ access the server apparatus 103 via different access points, but it is possible to access the server apparatus 103 via the same access point or directly access the server apparatus 103 via the network 102 rather than via an access point.

Further, the number of the terminal apparatuses engaged in multipoint communication (party communication) may be any number so long as there are at least two.

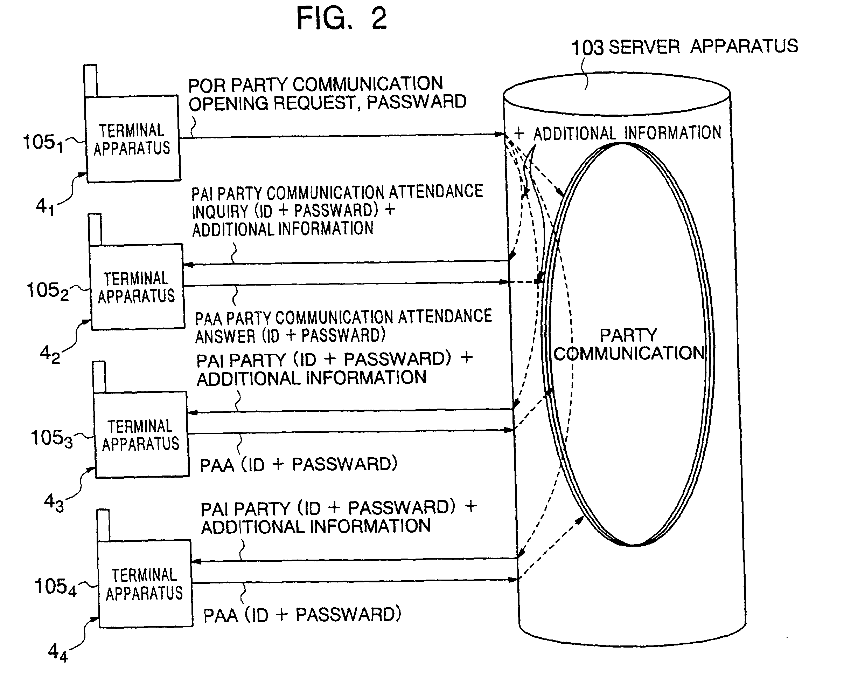

FIG. 2 is a view for explaining the concept of the multipoint communication system 101 shown in FIG. 1.

As shown in FIG. 2, in the multipoint communication system 101, when a user 4₁ requests opening of party communication, a party communication opening request POR is sent from the terminal apparatus 105₁ to the server apparatus 103 via the network 102.

When the server apparatus 103 receives the party communication opening request POR, the server apparatus 103 determines an ID for identify the party communication and requests the terminal apparatus 105₁ for a password and receives the password from the terminal apparatus 105₁ in response to the request.

Next, the server apparatus 103, for example, sends a party communication attendance inquiry PAI including the ID of the party communication and the password and transmits additional information to introduce the content of the party communication to the terminal apparatuses 105₂, 105₃, and 105₄ of the users 4₂, 4₃, and 4₄ who the sponsor requests attendance in the party communication based on the party communication opening request POR and information specifying the destinations of requests for attendance in party communication received from the terminal apparatus 105₁.

When receiving the party communication attendance inquiry PAI, the terminal apparatuses 105₂ to 105₄ display the content of the additional information in their display apparatuses, for example, and send party communication attendance answers PAA input by operating operation keys etc. by the users 4₂ to 4₄ to the server apparatus 103.

When receiving the party communication attendance answers PAA from the terminal apparatuses 105₂ to 105₄, the server apparatus 103 controls the party communication including the terminal apparatuses 105₂ to 105₄ when the answers indicate that they will attend the party communication.

Note that when answering to the effect that the users 4₂ to 4₄ will attend the party communication, the terminal apparatuses 105₂ to 105₄ automatically transmit the party communication ID and password included in the party communication attendance inquiry PAI received from the server apparatus 103 to the server apparatus 103.

On the other hand, when the party communication attendance answers PAA from the terminal apparatuses 105₂ to 105₄ indicate that the terminal apparatuses 105₂ to 105₄ will not attend the party communication, the server apparatus 103 notifies the terminal apparatus 105₁ of the sponsoring user 4₁ to that effect.

Below, components of the multipoint communication system 101 will be described in detail.

### [Server apparatus 103]

The server apparatus 103 constructs, manages, etc. party communication via the network 102.

The server apparatus 103 has connected to it a user information management database 106, a community group database 107, and a charging database 108.

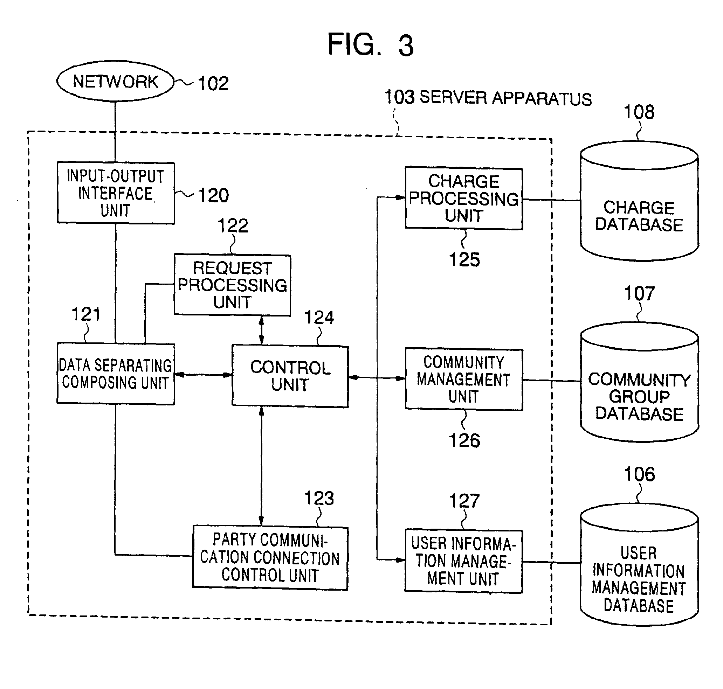

FIG. 3 is a functional block diagram of the server 103.

As shown in FIG. 3, the server apparatus 103 has an input-output interface unit 120, a data separating/composing unit 121, a request processing unit 122, a party communication connection control unit 123, a control unit 124, a charge processing unit 125, a community management unit 126, and a user information management unit 127.

Here, the request processing unit 122 and the control unit 124 correspond to the communication control means of the present invention, while the charge processing unit 125 corresponds to the charge processing means of the present invention.

The input-output interface unit 120 outputs packet data received from the terminal apparatuses 105₁, to 105₄ via the network 102 to the data separating/composing unit 121. In addition, the input-output interface unit 120 transmits packet data input from the data separating/composing unit 121 to the terminal apparatuses 105₁ to 105₄ via the network 102.

The data separating/composing unit 121 judges if the information of the packet data input from the input-output interface unit 120 is request information such as a party communication opening request, a party communication attendance inquiry request, or a party communication disconnect request or image information or speech information transferred in the actually opened party communication.

When the information of the input packet data is request information, the data separating/composing unit 121, outputs the request information to the request processing unit 122.

When the information of the input packet data is image information or speech information, the data separating/composing unit 121 composes information in a format corresponding to each user attending the party communication, generates packet data storing the composed information, and outputs it to the input-output interface unit 120 under the control of the party communication connection control unit 123.

Note that, the data separating/composing unit 121 may also be made to multiplex information received from a plurality of the terminal apparatuses to generate information to be transmitted to other terminal apparatuses and have the processing for composing the information carried out in each terminal apparatus.

When receiving as input request information from the data separating/composing unit 121, the request processing unit 122 analyzes the content of the information and outputs the result of analysis to the control unit 124.

Further, when making a party communication attendance inquiry to users to attend the party communication under the command from the control unit 124, the request processing unit 122 prepares the party communication attendance inquiry based on the additional information input from the control unit 124 and outputs it to the data separating/composing unit 121.

The additional information is, for example, comprised of the attendants of the party communication, the theme, the charging method, time information, control information for the terminal apparatuses of the users, and security information.

The party communication connection control unit 123 controls the connection of the terminal apparatuses 105₁ to 105₄ of the users 4₁ to 4₄ to attend the party communication and the transfer of image information and speech information at the terminal apparatuses 105₁ to 105₄.

Specifically, the party communication connection control unit 123 controls the information such as the image information and speech information transmitted by the terminal apparatus 105₁ to 105₄ attending the party communication to be received by the terminal apparatuses 105₁ to 105₄ other than the terminal apparatuses 105₁ to 105₄ transmitting the information.

The control unit 124 controls the components of the server apparatus 103 comprehensively.

When receiving as input the result of the analysis of the party communication opening request from the request processing unit 122, the control unit 124 controls the components to open the party communication while accessing the charge processing unit 125, the community management unit 126, and the user information management unit 127.

When receiving as input the result of the analysis of the party communication attendance inquiries from the request processing unit 122, the control unit 124 controls the components to issue a party communication attendance inquiry to the terminal apparatus of a designated user while accessing the charge processing unit 125, the community management unit 126, and the user information management unit 127.

When receiving as input the result of the party communication disconnect request from the request processing unit 122, the control unit 124 controls the components so that the terminal of the designated user disconnects the party communication while accessing the charge processing unit 125, the community management unit 126, and the user information management unit 127.

In response to a command from the control unit 124, the charge processing unit 125 carries out the charge processing for the party communication service to each user attending the party communication and writes the result into the charge database 108.

In response to a command from the control unit 124, the community management unit 126 generates information to specify the users attending each party communication and writes this into the community group database 107 and reads the information from the community group database 107 and outputs it to the control unit 124 as the need arises.

The user information management unit 127 writes information about a registered user into the user information management database 106 and reads the information from the user information management database 106 and outputs it to the control unit 124 as the need arises.

### [Terminal apparatuses 105₁ to 105₄]

The terminal apparatuses 105₁ to 105₄ are, for example, mobile phones or personal computers.

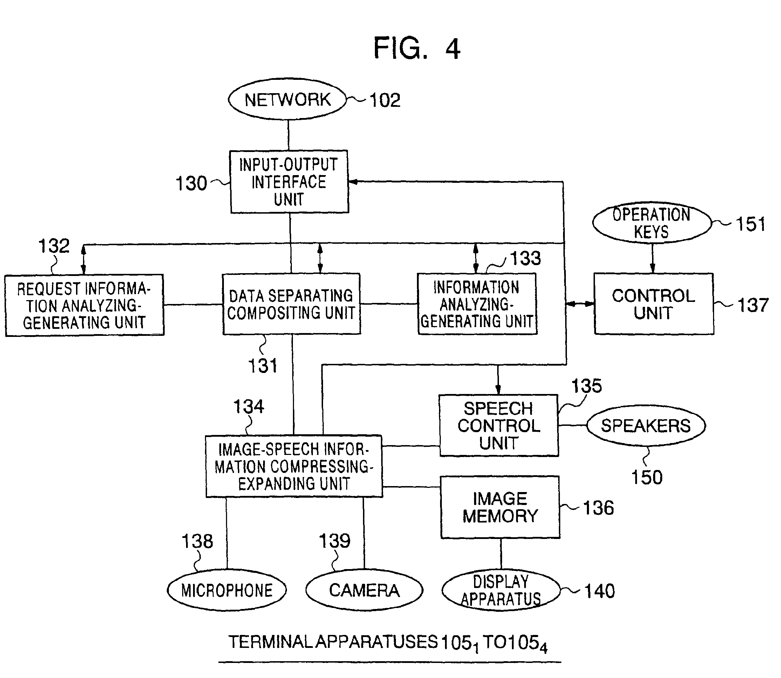

FIG. 4 is a functional block diagram of the terminal apparatus 105₁ shown in FIG. 1.

The terminal apparatuses 105₂ to 105₄ have, for example, the same configuration as the terminal apparatus 105₁.

As shown in FIG. 4, the terminal apparatus 105₁ has, for example, an input-output interface unit 130, a data separating/composing unit 131, a request information analyzing/generating unit 132, an information analyzing/generating unit 133, an image-speech information compressing/expanding unit 134, a speech control unit 135, an image memory 136, a control unit 137, a microphone 138, a camera 139, a display 140, speakers 150, and operation keys 151.

Here, the display apparatus 140 corresponds to the display means of the present invention, while the speakers 150 correspond to the speech output means of the present invention.

The input-output interface unit 130 outputs packet data received from the server apparatus 103 via the network 102 to the data separating/composing unit 131 and transmits the packet data input from the data separating/composing unit 131 to the server apparatus 103 via the network 102.

The data separating/composing unit 131 judges if the information stored in the packet data is request information for requesting some sort of response from the user such as party communication attendance inquiry information from the server apparatus 103, image information or speech information transferred after opening the party communication, or other text information or control information of the terminal apparatus based on header information in the packet data input from the input-output interface unit 130.

Note that, in the present embodiment, the image information and the speech information are information used in the conversation etc. among the terminals connecting to the party communication and are image information of the faces of the users and speech information of the voices of the users.

When the information input from the data separating/composing unit 131 is request information, the data separating/composing unit 131 outputs the request information to the request information analyzing/generating unit 132.

When the information input from the data separating/composing unit 131 is image information or the speech information, it outputs the information to the image-speech information compressing/expanding unit 134.

When the information input from the data separating/composing unit 131 is information other than the above information, it outputs the information to the information analyzing/generating unit 133.

Further, when receiving as input request information from the request information analyzing/generating unit 132, the data separating/composing unit 131 adds the header information to the request information to generate packet data and outputs the packet data to the input-output interface unit 130.

Further, when receiving as input image information or speech information from the image-speech information compressing/expanding unit 134, the data separating/composing unit 131 adds header information to the information to generate packet data and outputs the packet data to the input-output interface unit 130.

Further, when receiving as input information other than the above information from the information analyzing/generating unit 133, the data separating/composing unit 131 adds header information to the information to generate packet data and outputs the packet data to the input-output interface unit 130.

The request information analyzing/generating unit 132 analyzes the request information input from the data separating/composing unit 131 and outputs the result to the control unit 137.

The request information analyzing/generating unit 132 generates request information such as a party communication opening request, a party communication attendance inquiry request, and a party communication disconnect request in response to a command from the control unit 137 and outputs it to the data separating/composing unit 131.

The information analyzing/generating unit 133 analyzes the information other than the above information input from the data separating/composing unit 131 and outputs the result to the control unit 137.

The image-speech information compressing/expanding unit 134 performs image compression coding and decoding such as the MPEG (Moving Picture Experts Group) 1, MPEG2, and MPEG4 for the image information and speech compression coding and decoding such as the ATRAC (Adaptive TRransform Audio Coder) and CELP for the speech information.

The image information may also be graphic data. In this case, the image-speech information compressing/expanding unit 134 performs graphic processing.

The image-speech information compressing/expanding unit 134 decodes the image information and the speech information input from the data separating/composing unit 131, outputs the decoded image information to the image memory 136, and outputs the decoded speech information to the speech control unit 135.

Further, the image-speech information compressing/expanding unit 134, for example, carries out compression coding of the image information from the camera 139 and outputs the coded information to the data separating/composing unit 131.

Further, the image-speech information compressing/expanding unit 134 carries out compression coding of the speech information from the microphone 139 and outputs the coded information to the data separating/composing unit 131.

The speech control unit 135 outputs the speech information from the image-speech information compressing/expanding unit 134 to the speakers 150 after D/A conversion, speech switching processing, etc.

The image memory 136 stores the image information from the image-speech information compressing/expanding unit 134 and outputs it to the display apparatus 140 as frame data. The display apparatus 140 displays a screen corresponding to the input frame data.

The control unit 137 controls each component in the terminal apparatus 105₁ comprehensively.

The display apparatus 140 is a display such as an LCD (liquid crystal display).

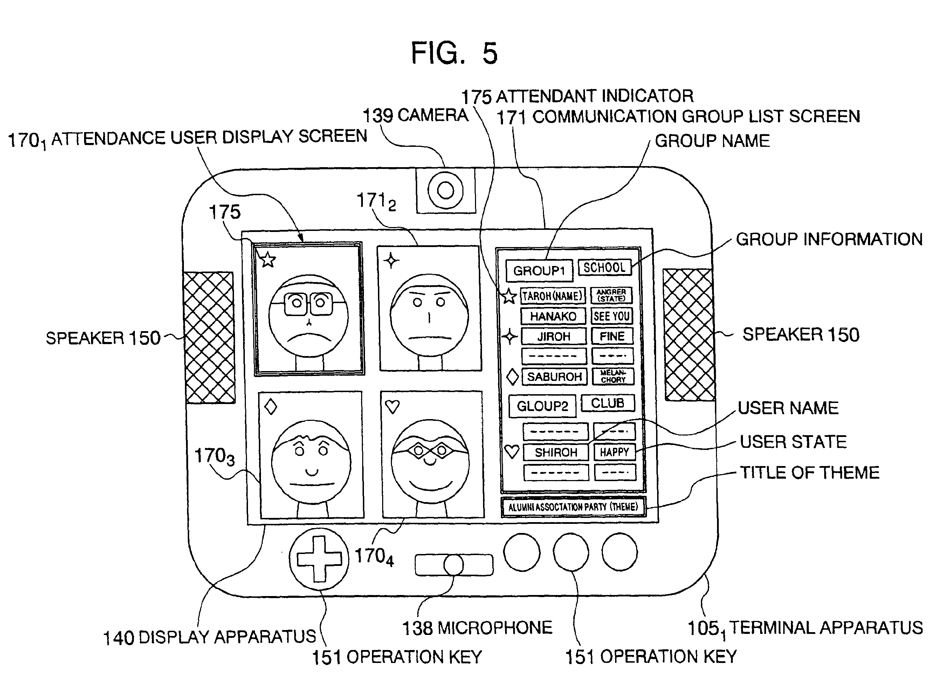

FIG. 5 is a schematic external view of the display apparatus 140 of the terminal apparatus 105₁ and shows an example of the screen after the start of the party communication on the display.

As shown in FIG. 5, the terminal apparatus 105₁ is provided with speakers 150 at the two sides of the display apparatus 140 and provided with the microphone 138 and the operation keys 151 at the bottom of the display in the illustration. Further, the camera 139 is provided at the top of the display apparatus 140 in the illustration.

The display apparatus 140 displays screens 170₁, 170₂, 170₃, and 170₄ of the faces of all the attendants or some of the attendants of the party communication at the left side in the illustration.

Further, the display apparatus 140 displays a communication group list screen 171 at the right side in the illustration.

The communication group list screen 171, for example, displays for a group of the group name "GROUP 1" the group information "SCHOOL", the names of the members of the group (users belonging to group 1 among the attendants of the party communication), and text information indicating the feeling of the members.

Further, the communication group list screen 171 further displays, for example, for a group of the group name "GROUP 2" the group information "CLUB", the names of the members of the group (users belonging to group 2 among the attendants of the party communication), and text information indicating the feelings of the members.

For users whose faces are currently displayed on the screens 170₁, to 170₄, attendant indicators 175 are displayed at the left sides of the names of the users displayed in the communication group list screen 171 in the figure.

Further, attendant indicators 175 of the corresponding users are displayed in the screens 170₁ to 170₄ as well.

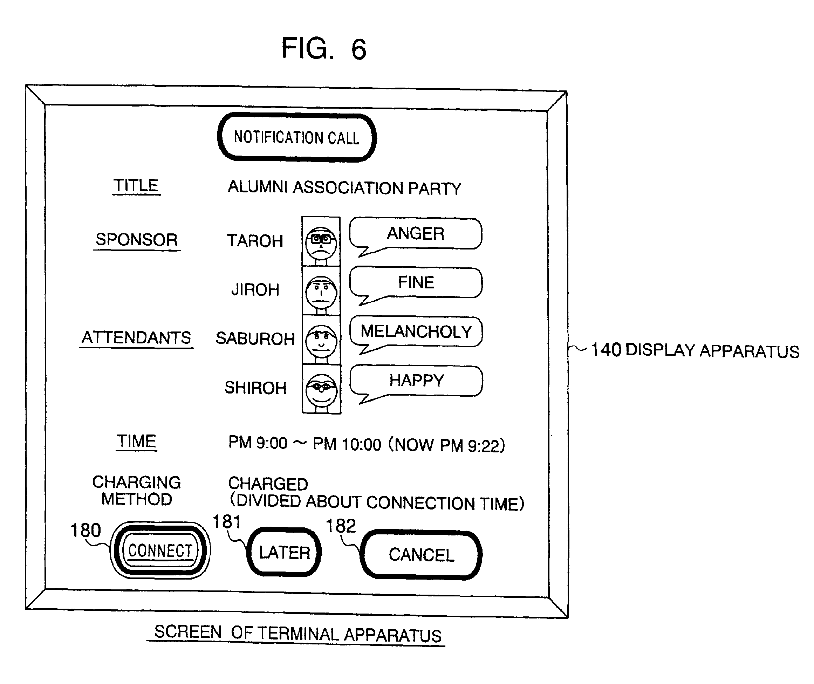

FIG. 6 is a view explaining one example of a screen displayed on the display apparatus 140 of the terminal apparatus 105₂ when the terminal apparatus 105₂ receives a party communication attendance inquiry from the server apparatus 103.

As shown in FIG. 6, in this case, the display apparatus 140 displays the title of the party communication, the name and a screen of the face of the sponsor, the names and screens of faces of the attendants, and text information indicating the feelings of the same.

Further, the display displays a scheduled opening time of the party communication, the present time, and the charging method.

Further, the display displays a display pattern 180 to be clicked when the user 4₁ of the terminal 105₂ will attend the party communication, a display pattern 181 to be clicked when the user will attend not at once but later, and a display pattern 182 to be clicked when the user will not attend the party communication.

The user 4₁ views the information about the party communication displayed on the display and clicks on (selects) one of the display patterns 180, 181, and 182 using the operation keys 151 etc. to answer to the server apparatus 103 whether he or she will attend the party communication.

Note that, for example, when the user 4₁ clicks on the display pattern 181 or 182, next, for the reference of the user 4₁ for attending the party communication, it is also possible to display the content of a change in the state of the party communication on the display apparatus 140 of the terminal apparatus 105₂ when there such a case, for example, when a new user attends, when a user attending the party communication disconnects, or when the topic changes.

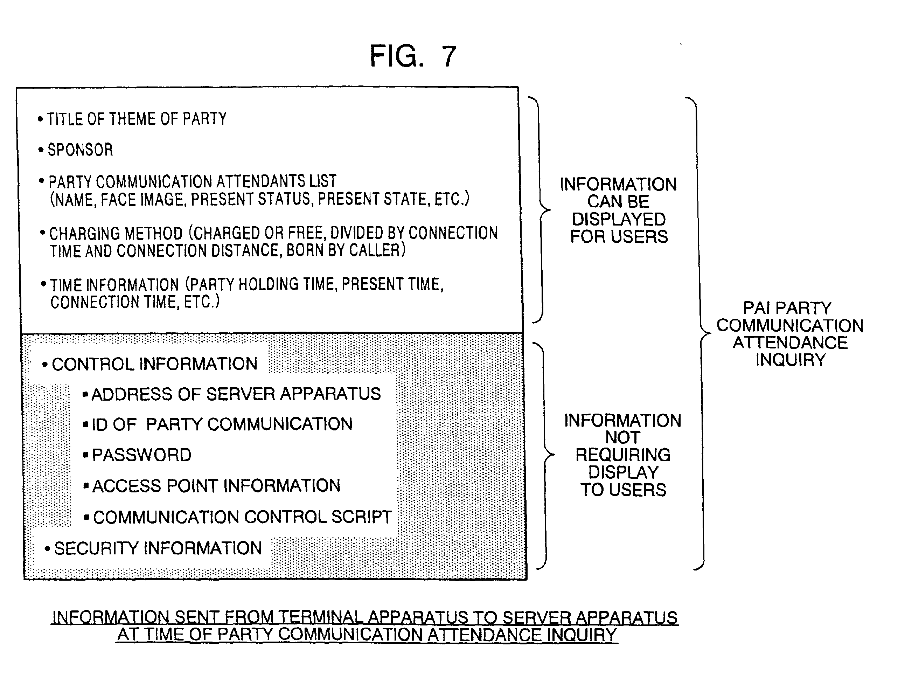

Note that the information included in the party communication attendance inquiry sent to the terminal apparatuses 105₂ to 105₄ from the server apparatus 103, as shown in FIG. 6 and FIG. 7, includes not only the information to be displayed to the users, but also information not necessary to notify to the users such as the address of the server apparatus 103, the ID information of the party information, the password, the access point information, the communication control script, and the security information. Such information is not displayed on the display apparatus 140, but for example is used for the processing in the terminal apparatuses so that the users can attend the party communication by a simple operation.

Below, examples of the operation of the multipoint communication system 101 will be explained.

### [First Example of Operation]

In the present example of operation, the explanation will be made of the operation when, for example, the users 4₁, 4₂, and 4₄ are engaged in the party communication and right in the middle of that the user 4₁ performs an operation requesting the attendance of the user 4₃ in the party communication and a party communication attendance inquiry is sent from the terminal apparatus 105₁ to the server apparatus 103.

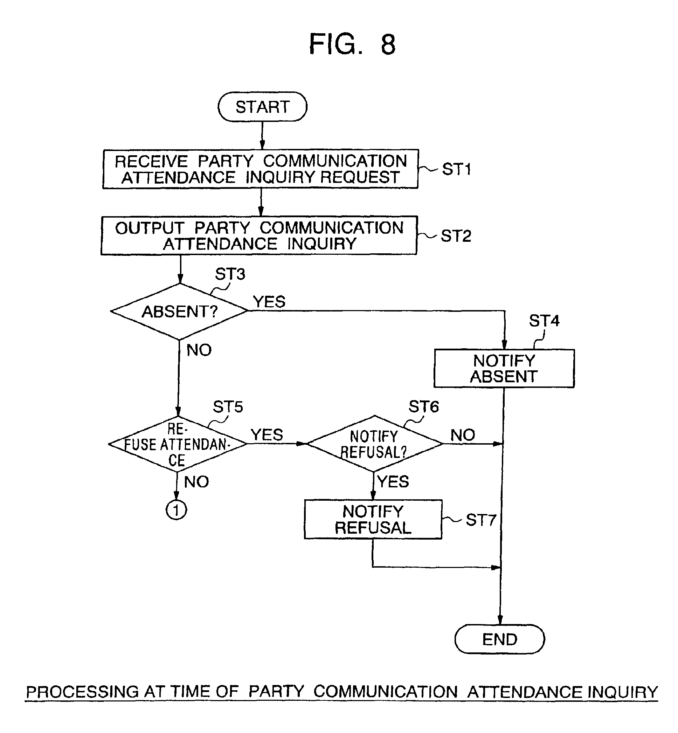

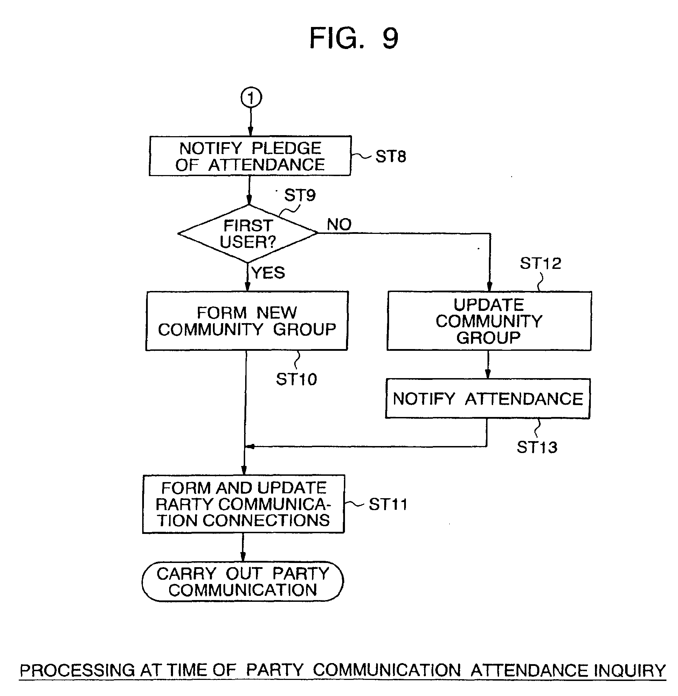

FIG. 8 and FIG. 9 are flow charts of the example of operation.

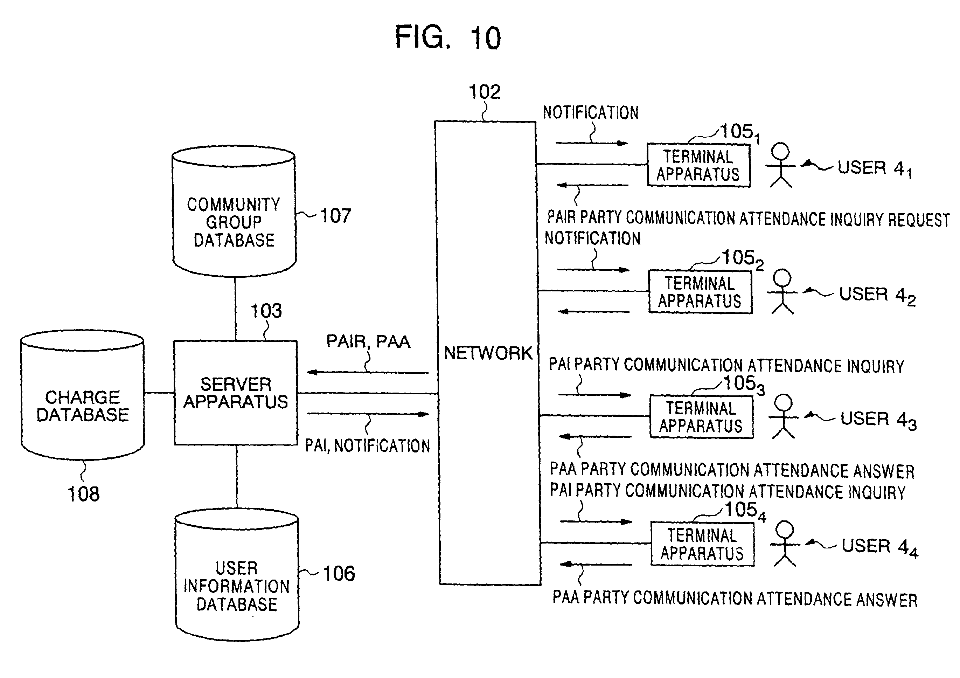

FIG. 10 is a view for illustrating the flow of the information in the example of operation.

Step ST1: The user 4₁ operates the operation keys 151 of the terminal apparatus 105₁ to issue a party communication attendance inquiry request PAI to the effect of requesting the server apparatus 103 inquire to the user 4₃ about attending the party communication via the network 102.

Step ST2: When receiving the party communication attendance inquiry request, the server apparatus 103 makes a party communication attendance inquiry PAI to the terminal apparatus 105₃ of the user 4₃.

Step ST3: The server apparatus 103 judges whether the user 4₃ of the terminal apparatus 105₃ is absent, executes the processing of step ST4 if judging it to be absent, and executes the processing of step ST5 if not.

The server apparatus 103 judges that the user 4₃ is absent for example when not receiving a response from the terminal apparatus 105₃ for a predetermined time after issuing the party communication attendance inquiry PAI.

Step ST4: When judging that the user 4₃ is absent, the server apparatus 103 notifies the terminal apparatus 105₁ of the user 4₁ to that effect.

Step ST5: When the party communication attendance answer PAA received from the terminal apparatus 105₃ indicates that attendance in the party communication is refused, the server apparatus 103 executes step ST6, while if it indicates that it will attend the party communication, executes the processing of step ST8.

Step ST6: The server apparatus 103 judges, for example, whether the user 4₁ requests refusal notification, executes the processing of step ST7 if it requests refusal notification, and ends the processing if it does not.

Step ST7: The server apparatus 103 outputs a notification to the effect that the user 4₃ refused attendance at the party communication to the terminal apparatus 105₁.

Step ST8: The server apparatus 103 outputs a notification to the effect that the user 4₃ pledges attendance at the party communication to the terminal apparatus 105₁.

Step ST9: The server apparatus 103 judges whether the user 4₃ is the first attendant at the party communication, executes the processing of step ST10 if it is, while executes the processing of step ST12 if it judges the user to be a second or later attendant.

Note that, in the present example of operation, the user 4₃ is the fourth attendant at the party communication, so the processing of step ST12 is executed.

Step ST10: The server apparatus 103 forms a new community group by the user sponsoring the party communication and the users newly attending this time and writes the information into the community group database 107.

Step ST11: The party communication connection control unit 123 of the server apparatus 103 shown in FIG. 3 controls the multipoint communication (party communication) among the plurality of the terminals including the terminal apparatuses of the one or more users attending the party communication already and the terminal apparatuses of the users newly attending.

In the present example of operation, the party communication connection control unit 123 controls the party communication among the terminal apparatuses 105₁ to 105₄.

Step ST12: The server apparatus 103 adds the user 4₃ newly attending the party communication to the community group of the party communication and writes the information into the community group database 107.

Step ST13: The server apparatus 103 outputs a notification to the effect that the user 4₃ newly attends the party communication to the terminal apparatuses 105₁, 105₂, and 105₄.

### [Second Example of Operation]

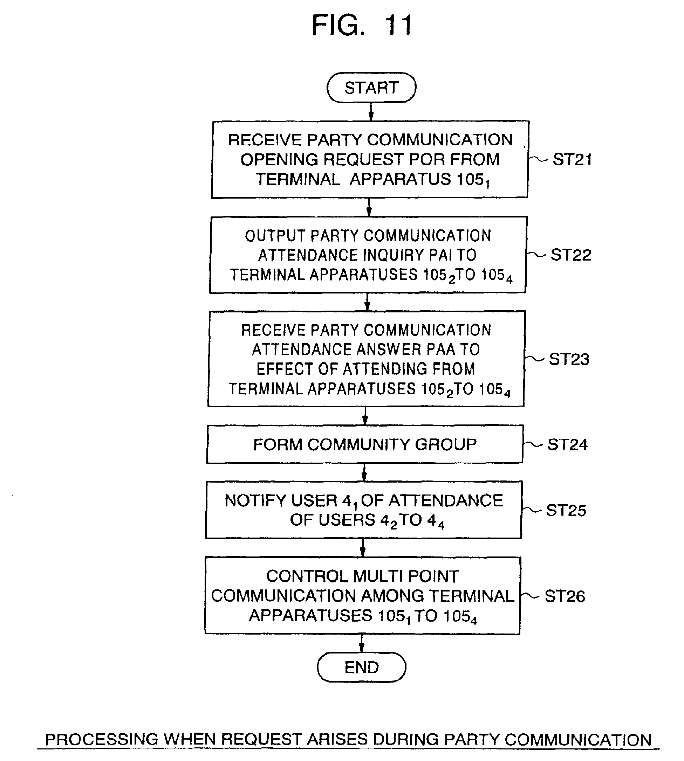

In the present example of operation, the explanation will be given of the case where the user 4₁ issues a party opening request requesting the opening of party communication for attendance by the users 4₁ to 4₄ from the terminal apparatus 105₁ to the server apparatus 103 and the users 4₂, 4₃, and 4₄ pledge to attend the party communication while again using FIG. 1 and the flow chart shown in FIG. 11.

Step ST21: The server apparatus 103 receives the party communication opening request POR output by the user 4₁ operating the operation keys 151 of the terminal apparatus 105₁ via the network 102.

When receiving the party communication opening request POR, the server apparatus 103 determines the ID for identifying the party communication, requests a password from the terminal apparatus 105₁, and receives the password from the terminal apparatus 105₁ in response to the request.

Step sT22: The server apparatus 103 issues party communication attendance inquiries PAI including the ID of the party communication and the password to the terminal apparatuses 105₂ to 105₄ of the users 4₂ to 4₄ whose attendance in the party communication is requested and transmits additional information for introducing the content of the party communication based on, for example, the party communication opening request POR and information specifying the destination of the requests for attendance in the party communication received from the terminal apparatus 105₁.

Step ST23: When receiving the party communication attendance inquiries PAI, the terminal apparatuses 105₂ to 105₄ display the content of the additional information on the displays for example and send party communication attendance answers PAA to the effect of attending the party communication to the server apparatus 103 in response to operation of the operation keys etc. by the users 4₂ to 4₄. The server apparatus 103 receives the answers.

At this time, when the users 4₂ to 4₄ answer to the effect of attending the party communication, the terminal apparatuses 105₂ to 105₄ transmit the party communication ID and the password included in the party communication attendance inquiries PAI received from the server apparatus 103 to the server apparatus 103 automatically.

Step ST24: When receiving the party communication attendance answers PAA, the server apparatus 103 forms a new community group comprised of the users 4₁ to 4₄ and registers it in the community group database 107.

Step ST25: The server apparatus 103 sends a notification to the effect that the users 4₂ to 4₄ pledge to attend the party communication to the terminal apparatus 105₁ of the user 4₁ sponsoring the party communication.

Step ST26: The party communication connection control unit 123 of the server apparatus 103 controls the party communication among the terminal apparatuses 105₁ to 105₄.

### [Third Example of Operation]

In this example of operation, the explanation will be given of the processing when the server apparatus 103 receives a party communication disconnect request in the case where the terminal apparatus 105₃ outputs a party communication disconnect request PDR.

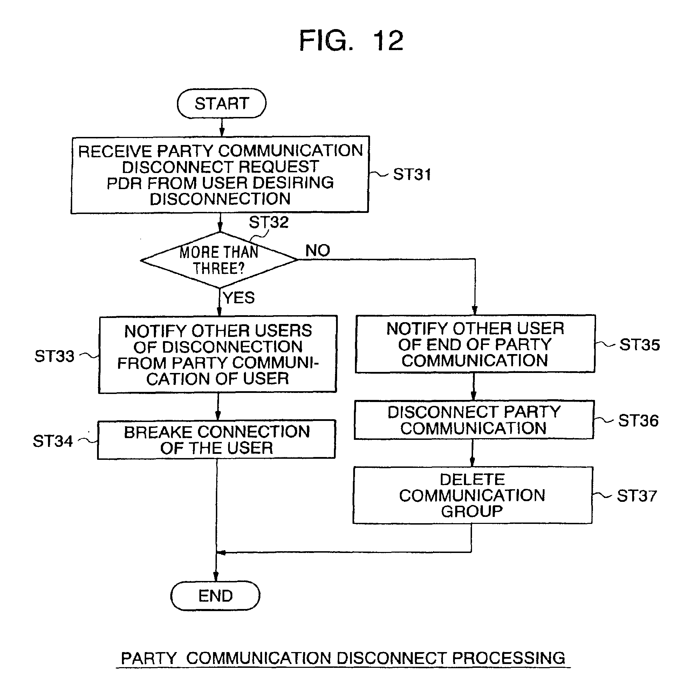

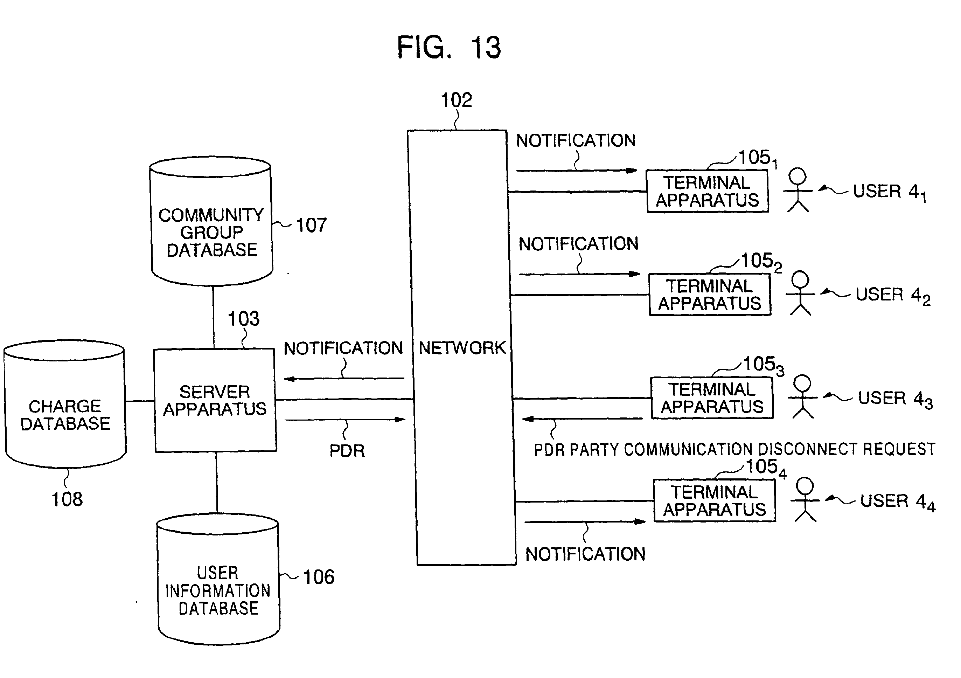

FIG. 12 is a flowchart of the processing and FIG. 13 is a view explaining the flow of the information in the processing.

Step ST31: The server apparatus 103 receives the party communication disconnect request PDR from the terminal apparatus of the user requesting the disconnection of the party communication via the network 102. In the present example of operation, the server apparatus 103 receives the party communication disconnect request PDR from the terminal apparatus 105₃.

Step ST32: The server apparatus 103 judges whether the number of the users attending the party communication is two or more. If judging it to be three or more, it executes the processing of step ST33, while if judging it to be two, executes the processing of step ST35. In the present example of operation, four users 4₁ to 4₄ attend the party communication, so the processing of step ST33 is executed.

Step ST33: The server apparatus 103 notifies the terminal apparatuses of the other users that the user will disconnect the party communication.

In the present example of operation, the server apparatus 103 notifies the terminal apparatus 105₁, 105₂, and 105₄ of the other users 4₁, 4₂, and 4₄ that the user 4₃ will disconnect the party communication.

Step ST34: The party communication connection control unit 123 of the server apparatus 103 breaks off the terminal apparatus issuing the party communication disconnect request PDR from the connection of the party communication.

In the present example of operation, the party communication connection control unit 123 of the server apparatus 103 breaks off the connection of the terminal apparatus 105₃ from the party communication conducted among the terminal apparatuses 105₁ to 105₄ and controls the party communication among the terminal apparatuses 105₁, 105₂, and 105₄.

Step ST35: The server apparatus 103 notifies the terminal apparatus of the other user that the user issuing the party communication disconnect request PDR that the user will disconnect from the party communication and that the party communication will end.

Step ST36: The server apparatus 103 breaks the connection to the party communication of the terminal apparatuses of the two users connecting to the party communication.

Step ST37: The server apparatus 103 deletes the community group of the party communication stored in the community group database 107.

As described above, according to the multipoint communication system 101, when a user opens party communication, it is not necessary to exchange the information among the users without relation to the server apparatus 103. As a result, it is possible to promote attendance of users in party communication.

Further, according to the multipoint communication system 101, when the terminal apparatus 105₁ issues a party communication opening request, for example, if the users 4₂ to 4₄ carry out the simple operation of selecting the display pattern 180 shown in FIG. 6 by the operation keys 151, the terminal apparatuses 105₂ to 105₄ automatically access the server apparatus 103 using the ID of the party communication and the password included in the party communication attendance inquiries PAI received from the server apparatus 103. Therefore, the users 4₂ to 4₄ do not have to input this information by operating the operation keys 151 by themselves. Further, input error of the ID and the password is avoidable.

Further, only the terminal apparatus receiving party communication attendance inquiries PAI from the server apparatus 103 can automatically access the server apparatus 103, so the security is high.

The present invention is not limited to the above first embodiment.

In the above embodiment, the case was shown where for example, that image information and speech information transmitted from the terminal apparatuses 105₁ to 105₄ were received by the server apparatus 103 in the multipoint communication, then the information was transmitted from the server apparatus 103 to the terminal apparatuses 105₁ to 105₄ other than the terminal apparatus transmitting the information, but the server apparatus 103 can also control the transmission of the packet data in the network 102 so that it does not receive the information but has the information received by the terminal apparatuses 105₁ to 105₄ other than the terminal apparatuses transmitting the information.

Further, the functions of the server apparatus 103 shown in FIG. 3 and those of the terminal apparatus 105₁ to 105₄ shown in FIG. 4 can be realized by hardware or can be realized by executing a program describing the processing by a processing circuit such as a CPU. Further, the present invention may also be applied to the case where software describing the processing is recorded on a recording medium such as a DVD (digital versatile disc) or distributed via a network.

Further, for the mode of connection of the terminal apparatus 105₁ to 105₄ to the party communication in response to a party communication attendance inquiry received from the server apparatus 103, the connection from the server apparatus 103 for the party communication attendance inquiry can be used as it is or connection can be established by the terminal apparatuses 105₁ to 105₄ telephoning the server apparatus 103.

### Second Embodiment

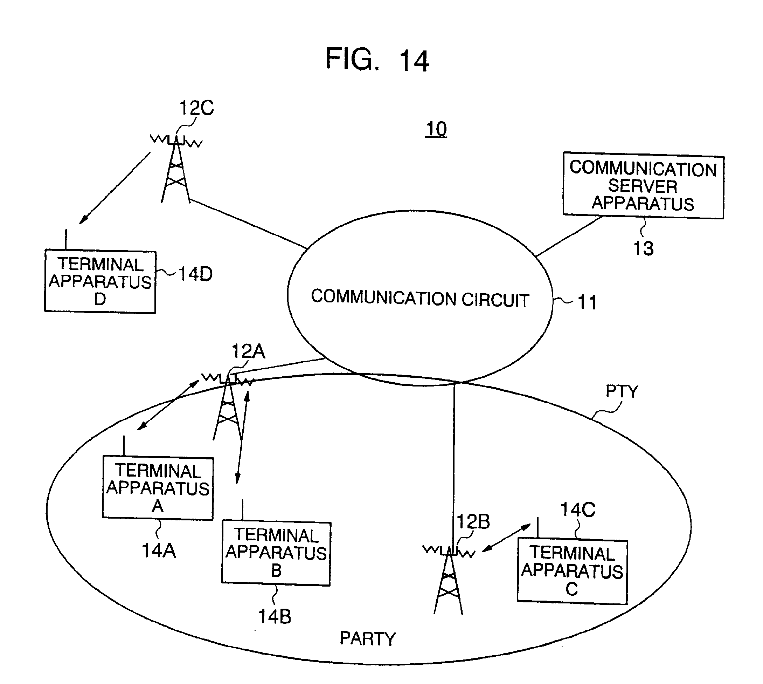

FIG. 14 is a connection diagram showing an outline of a communication system adopting the communication method of the present invention.

The second embodiment is an embodiment corresponding to the fifth to seventh aspects of the invention.

A communication system 10 according to the present embodiment, as shown in FIG. 14, is configured by a plurality (three in FIG. 14) of relay stations 12A, 12B, and 12C and a communication server apparatus (below, simply called a server apparatus) 13 connected to communication circuits 11 such as IMT-2000 (International Mobile Telecommunications-2000) so that, for example, mobile phones and other mobile terminal apparatuses (below, simply called terminal apparatuses) 14A, 14B, 14C, and 14D able to communicate wirelessly can communicate via the relay stations 12A to 12C which they can receive from, the communication circuits 11, and the server apparatus 13.

The example of FIG. 14 shows a case where the terminal apparatuses 14A, 14B, and 14C are communicating with each other via the relay stations 12A and 12B, the communication circuit 11, and the server apparatus 13.

In the present embodiment, this state is defined as the formation of a party PTY. Therefore, in the example of FIG. 14, the terminal apparatus 14D is a state not attending the party PTY.

Each of the terminal apparatuses 14A, 14B, 14C, and 14D has a communication function of the data for communication such as images and speech and an input device for the same and for example an input device for commands and keywords such as buttons, a keyboard, or a touch panel.

A keyword can be input and transmitted to the server apparatus 13 from any one of the terminal apparatus 14A to 14C attending the party PTY.

Below, the basic communication mode between the terminal apparatuses and the server apparatus 13 in the present communication system 10, the principle of the server apparatus 13, and the specific configuration of the server apparatus will be described successively with reference to the drawings.

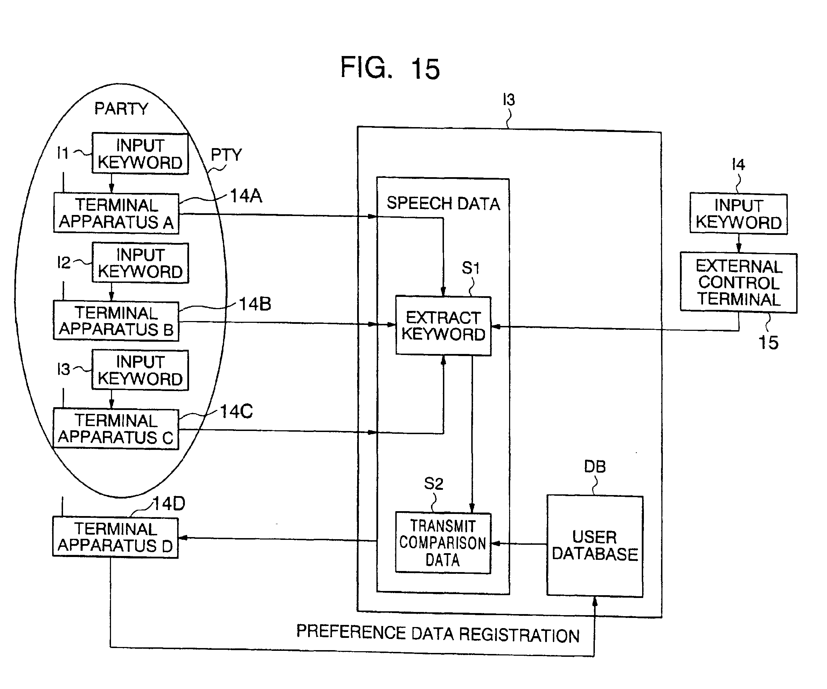

FIG. 15 is a view for explaining the basic connection mode between the server apparatus and the terminal apparatuses of the present invention in a case involving the transfer of a keyword and an operation for extracting the keyword in the server apparatus.

In FIG. 15, similar to the case of FIG. 14, the terminal apparatuses 14A, 14B, and 14C are attending the party PTY, while the terminal 14D is not attending the party PTY.

Further, in FIG. 15, an external control terminal 15 connected to the server apparatus 13 is configured by, for example, a terminal similar to the terminal apparatuses 14A to 14D but not attending the party PTY or a terminal such as a personal computer having only the input device for the keyword.

This external control terminal 15 must be given special authority from the server apparatus to control the information of the party.

As shown in FIG. 15, it is possible to input a keyword from the terminal apparatuses 14A, 14B, and 14C attending the party PTY and the external control terminal 15 connected to the server apparatus 13 (I1 to I4).

The server apparatus 13 has a user database DB inside it.

In the user database, for example, data of the users of the terminal 14A to the terminal 14D, for example, data used as the keywords of interesting matters, are registered (preference data registration).

Further, the server apparatus 13 receives a keyword from the terminal apparatuses 14A, 14B, and 14C attending the party PTY and the external control terminal 15 or extracts a word serving as a keyword from the speech data used in the communication (step S1) and compares it with the data stored in the user database DB (step S2).

If the result of the comparison is that an affirmative result is obtained, for example, the information about the party is sent.

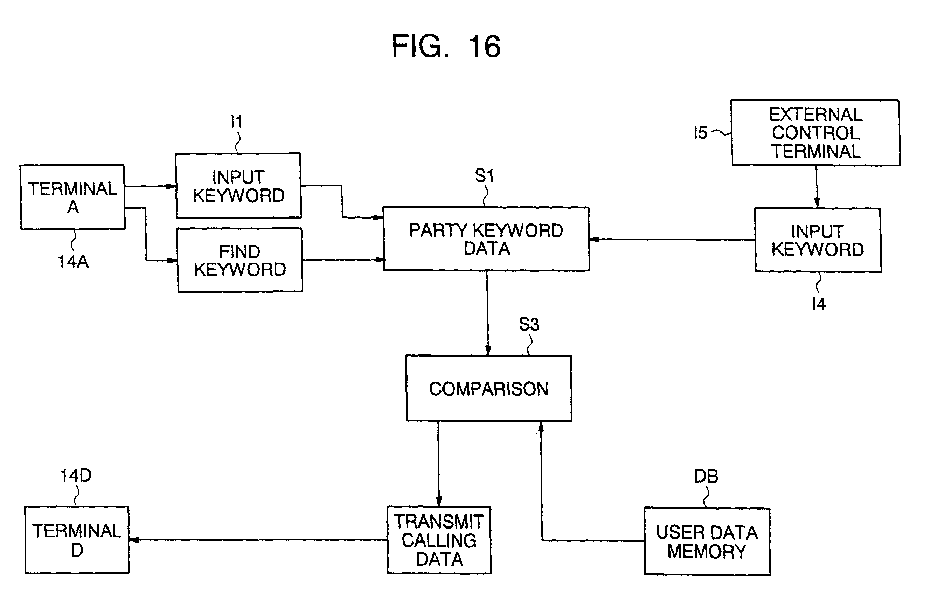

FIG. 16 is a view for further specifically explaining the function relating to the extraction of a keyword in the server apparatus.

As mentioned above, a keyword can be input by the input means of the keyword from any one of the terminal apparatuses 14A to 14C attending the party PTY and transmitted to the server apparatus 13.

Further, the keyword can be similarly input from the external control terminal 15 particularly given authority.

The server apparatus 13 side extracts a keyword from the speech data sent from the terminals based on the frequency of use etc. in addition to the keywords input from each of the terminal apparatuses 14A to 14C and the external control terminal 15 (S1).

The extracted keyword is compared with the data of the user information database and when a corresponding user is extracted, the information about the party inputting the keyword is transmitted to the terminal of the user (S3).

Here, the information about the party includes, for example, the theme of the party, the number of the attendants, the charging mode, the access points, a list of the attendants, etc.

The information to be transmitted is, for example in a case of wireless communication, transmitted attached to the radio wave emitted for searching for the location of the terminal.

Next, an example of a specific configuration of the server apparatus of the present invention will be described.

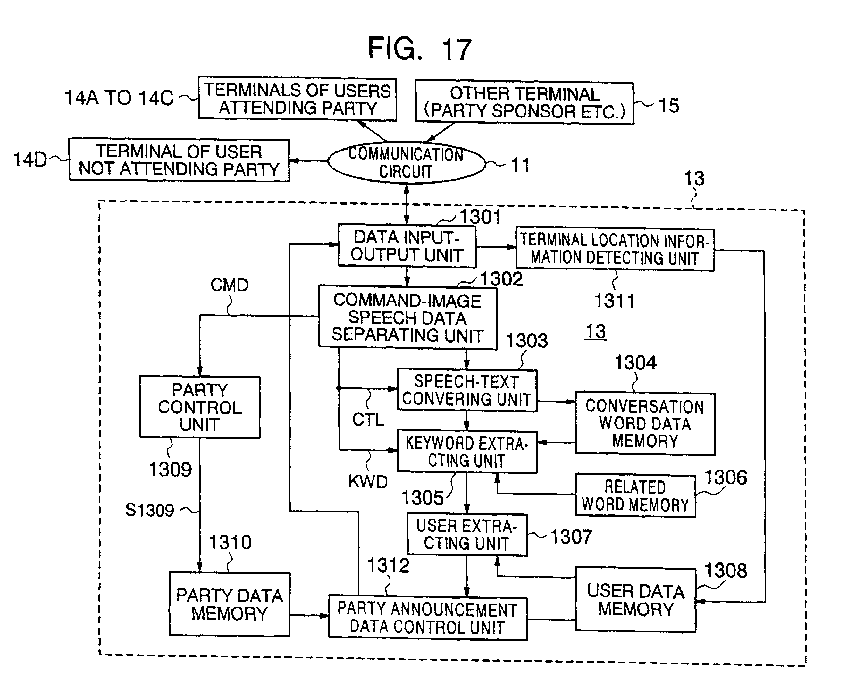

FIG. 17 is a block diagram showing an example of the specific configuration of the server apparatus of the present invention.

Note that, in FIG. 17, the communication circuit 11 have connected to them, in addition to the server apparatus 13, the user terminal apparatuses 14A to 14C attending the party PTY, the terminal apparatus 14D not attending the party PTY, and the external control terminal 15 given particular authority to control the party information. The external control terminal 15 is for example a user terminal promoting the party but not attending.

The server apparatus 13, as shown in FIG. 17, has a data input-output unit 1301, a data separating unit 1302, a speech-text converting unit 1303, a conversation word data memory 1304, a keyword extracting unit 1305, a related word memory 1306, a user extracting unit 1307, a user data memory 1308, a party control unit 1309, a party data memory 1310, a terminal location information detecting unit 1311, and a party announcement data control unit 1312.

The data input-output unit 1301 supplies data from the terminal apparatus etc. input via the communication circuit 11 to the data separating unit 1302 and the terminal location information detecting unit 1311. The data input-output unit 1301 also transmits party data from the party announcement data control unit 1312 to be transmitted to the users extracted by the user extracting unit 1307 to the communication circuit 11.

The data separating unit 1302 separates the data from the terminals input by the data input-output unit 1301 to commands and image and speech data and supplies the commands CMD to the party control unit 1309, supplies the image and speech data and control data CTL included in the commands to the speech-text converting unit 1303, and supplies keyword data KWD to the keyword extracting unit 1305.

The speech-text converting unit 1303 converts the speech data obtained from the data separating unit 1302 to text data based on the control data CTL, stores the converted data in the conversation word data memory 1304, and supplies it to the keyword extracting unit 1305.

Note that the speech-text converting unit 1303 carries out the speech-text conversion when the data is speech data, while stops the process and discards the input speech data when the processing control data is data indicating prohibition of conversion process.

Thus, it is possible to carry out the keyword extraction processing only in a range intend by the user.

The speech-text converting unit 1303 counts the frequency of use of words in the data converted to the text and stores the frequency of use and the word data in the conversation word data memory 1304.

Further, the speech-text converting unit 1303 counts the total number of words stored in the conversation word data memory and stores the words in the conversation and their frequency of use to an extent where the total number of words does not exceed a certain range X.

The keyword extracting unit 1305 extracts a keyword based on the conversation data stored in the conversation word data memory 1304, the keyword data KWD from the terminal, and word data related to the keyword stored in the related word memory 1306.

When the total number of words exceeds the certain range X, the keyword extracting unit 1305 extracts a noun etc. of a high frequency of use from the stored conversation data and extracts at least one related word by a comparison with a previously registered data of the related word memory 1306.

The keyword extracting unit 1305 clears the conversation word data memory 1304 and the total number of words after extracting the related word. Thus, even if the content of the party changes, the real time content is reflected.

The related word memory 1306 registers words related to keywords.

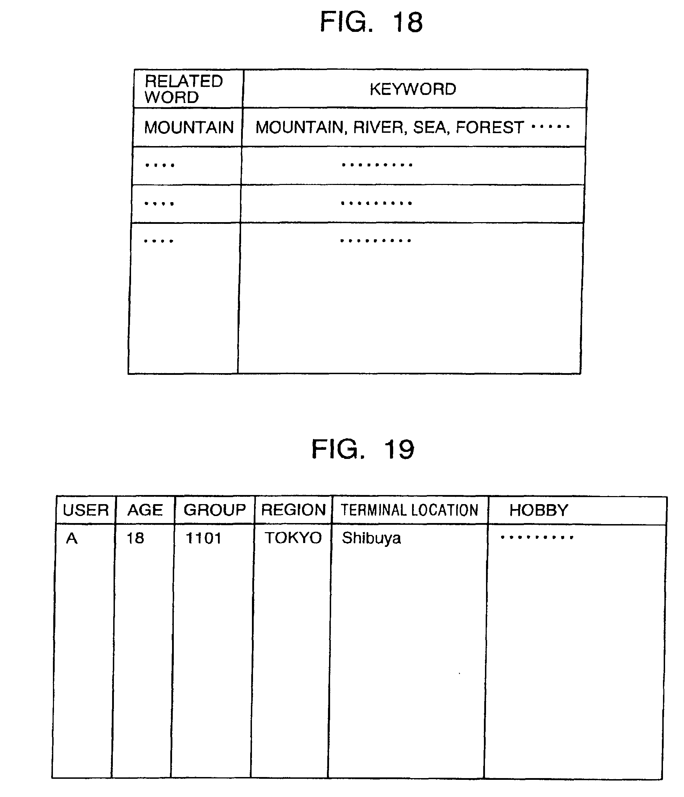

Specifically, the related word memory 1306 is, as shown in FIG. 18, a list of a words previously registered in the server apparatus, that is, the related words (in FIG. 18, "mountain") and a plurality of keywords related to the words (in FIG. 18, "mountain", "river", "sea", "forest", etc.) and searches for the keyword input from the terminal or extracted in the conversation from the keywords to extract a related word corresponding to it.

The user extracting unit 1307 extracts the user to whom the information about the party (party data) etc. should be transmitted from the keyword extracted in the keyword extracting unit 1305 and the user data registered in the user data memory 1308 and supplies it to the party announcement data control unit 1312.

In the user data memory 1308, as shown in FIG. 19, data comprising, for example, a user name, affiliated groups, age, region, hobbies, etc. are registered.

When the terminal apparatus is a terminal such as a mobile phone, the user data memory 1308 can update the data of the terminal location information obtained by the terminal location information detecting unit 1311 as the current terminal location in real time.

The party control unit 1309 generates a signal S1309 in response to a command CMD separated by the data separating unit 1302 and carries out reading control of the party data memory 1310 in which the information about the party is registered.

The party data memory 1310 registers information about the party and outputs the designated party data in response to a signal S1309 from the party control unit 1309 to the party announcement data control unit 1312.

Note that, the party data is data about the party for which the keyword was extracted and comprises, for example, the present number of the party attendants, the attendance fee and the method of payment, the theme of the party, etc.

The terminal location information detecting unit 1311 is received via the communication circuit 11 and obtains the location information of a moving terminal from the data provided by the data input-output unit 1301 and reflects it to the user data registered in the user data memory 1308.

The party announcement data control unit 1312 transmits the party data via the data input-output unit 1301 and further via the communication circuit 11 to the user extracted in the user extracting unit 1307.

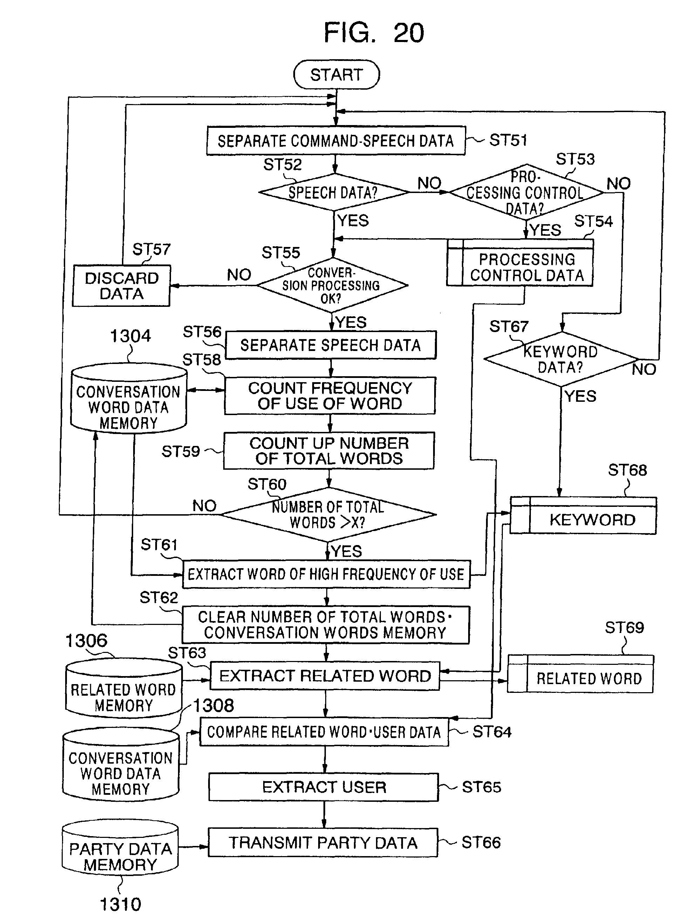

Next, the operation according to the above configuration will be described with reference to the flow chart of FIG. 20 centered around the operation of the server apparatus using the case where data including speech data is received from the terminal side as an example.

The data sent from the terminal apparatus and input to the server apparatus 13 via the communication circuit 11 is input to the data input-output unit 1301 and supplied to the data separating unit 1302 and the terminal location information detecting unit 1311.

The data separating unit 1302 separates the input data to commands CMD and the speech data (ST51).

The separated commands CMD are supplied to the party control unit 1309 and the speech data is supplied to the speech-text converting unit 1303 (ST52).

Further, when the command data is processing control data, the command data is supplied to a processing control data register of the speech-text converting unit 1303, while when keyword data is input, the command data is supplied to a keyword register of the keyword extracting unit 1305.

The speech-text converting unit 1303 receiving the speech data performs the speech-text conversion. If the processing control data is data indicating prohibition of conversion processing, however, it stops the conversion processing and discards the input speech data (ST52 to ST57).

That is, the speech-text converting unit 1303 converts the speech data other than the data prohibited from conversion processing by speech-text conversion and supplies the converted data to the keyword extracting unit 1305.

By this, the keyword extraction processing is carried out in a certain range intended by the user.

Further, the data converted to text in the speech-text converting unit 1303 is counted for the frequency of use of words, and the frequency of use and the data of words are stored in the conversation word data memory 1304 (ST58).

Furthermore, the total number of words stored in the data is counted and the words in the conversation and their frequency of use are stored in a certain range X of the total number of words (ST59, ST60).

When the total number of words exceeds the certain range X, the keyword extracting unit 1305 extracts the nouns etc. of high frequency of use in the stored conversation data and extracts at least one related word by comparison with the previously registered related word memory 1306 (ST61 to ST63).

Note that the conversation word data memory 1304 and the total number of words are cleared after extracting the related word (ST62). By this, even if the content of the party changes, the real time content at that time is reflected.

If a related word is extracted, the user extracting unit 1307 refers to the previously registered user data memory 1308 and extracts a plurality of the users covered by the related word (ST64, ST65).

Note that, the user data memory 1308 is data such as the user name, the affiliated groups, age, region, hobbies, etc. Further, when the terminal apparatus is a mobile terminal such as a mobile phone, the terminal location information is obtained by the terminal location information detecting unit 1311 and the data of this obtained terminal location information is updated as the current terminal location in real time.

The user extracting unit 1307, for example, extracts the users registering a word corresponding to the related word previously extracted as data of their hobby.

At that time, when the processing control data includes transmission limit data, for example, a limit is applied so that only users corresponding to the data of the affiliated groups, age, region, etc. are extracted.

Further, a limit is applied by the current terminal location information, whereby users are limited to the users in a particular region when called up.

When the user extracting unit 1307 extracts at least one user, the party announcement data control unit 1312 transmits the party data registered in the party data memory 1310 to the terminals of the extracted users via the data input-output unit 1301 and further via the communication circuit 11 (ST66).

As described above, according to the present embodiment, since there are communication circuit 11 and there are a plurality of terminal apparatus 14A to 14D having keyword input means for inputting a keyword and forming a party by communicating with each other via the communication circuit 11 and a server apparatus 13 comprising a keyword extracting unit 1305 receiving data including a keyword input by a terminal and extracting the keyword from the received data, a user database 1308 in which the user information is registered, a user extracting unit 1307 comparing the keyword extracted in the keyword extractor with the user information registered in the user database and extracting at least one corresponding user, and a party announcement data control unit 1312 for transmitting information about the party to the users extracted in the user extracting unit, party attendants can automatically invite party attendants interested in information related to the keyword by inputting the keyword to the terminal or extracting of the keyword from the speech of the conversation.

Further, the users previously registering their preferences etc. can obtain information about a party now under way and not attended and can decide whether to newly attend the party.

Further, even when the server apparatus side extracts the keyword, the party attendants can converse after securing privacy.

Further, not only the party attendants, but also the persons not attending but having authority, for example, the party sponsor, can solicit attendants by inputting a keyword.

Furthermore, the party information can be transmitted limited to the users meeting certain conditions other than the keyword.

Further, in the present embodiment, there is an advantage that when the total number of words exceeds the certain range X, by extracting nouns etc. of high frequency of use in the stored conversation data and extracting at least one related word in comparison with previously registered data of the related word memory 1306 and by clearing the conversation word data memory 1304 and the total number of words after extracting the related word, it is possible to reflect the real time content at the time.

Note that, the program carrying out the processing in the server apparatus is recorded in a computer readable provision medium such as an optical disc, a hard disk, or a semiconductor memory and is read and executed by a computer or other controller.

### INDUSTRIAL APPLICABILITY

As described above, according to the communication control apparatus, communication apparatus, communication system, and methods for the same used for multipoint communication via communication circuit of the present invention, it is possible to simplify the procedures and the operation for attending multipoint communication. Further, it is possible to heighten the security when attending the multipoint communication. Further, by inputting a keyword to a terminal or extracting a keyword from the speech of the conversation, multipoint communication attendants can invite multipoint communication attendants interested in information related to the keyword. Furthermore, users previously registering their preference etc. can obtain information about multipoint communication now under way and not attended and can decide whether to newly attend the multipoint communication. Further, even when the server apparatus side extracts the keyword, the multipoint communication attendants can converse after securing privacy among the attendants. Further, not only the multipoint communication attendants, but also a person not attending but having authority, for example, the multipoint communication sponsor, can solicit attendants by inputting a keyword etc. Further, the multipoint communication information can be transmitted limited to users meeting certain conditions other than the keyword. Furthermore, there is an advantage that when the content of the multipoint communication changes, it is possible to reflect the real time content at the time.

### LIST OF REFERENCES

- 101: multipoint communication system
- 102: network
- 103: server apparatus
- 104₁ to 104₄: access points
- 105₁ to 105₄: terminal apparatuses
- 106: user information management database
- 107: community group database
- 108: charge database
- 120: input-output interface unit
- 121: data separating/composing unit
- 122: request processing unit
- 123: party communication connection control unit
- 124: control unit
- 125: charge processing unit
- 126: community management unit
- 127: user information management
- 130: input-output interface unit
- 131: data separating/composing unit
- 132: request information analyzing/generating unit
- 133: information analyzing/generating unit
- 134: image-speech information compressing/expanding unit
- 135: speech control unit
- 136: image memory
- 137: control unit
- 138: microphone
- 139: camera
- 140: display apparatus
- 150: speakers
- 151: operation keys
- 10: communication control system
- 11: communication circuit
- 12a to 12c: relay stations
- 13: communication server apparatus
- 14a to 14d: terminal apparatus
- 15: external control terminal
- 1301: data input-output unit
- 1302: data separating unit
- 1303: speech-text converting unit
- 1304: conversation words data memory
- 1305: keyword extracting unit
- 1306: related word memory
- 1307: user extracting unit
- 1308: user data memory
- 1309: party control unit
- 1310: party data memory
- 1311: terminal location information detecting unit
- 1312: party announce data control unit

## Claims

1. A communication control apparatus for controlling multipoint communication conducted using a plurality of communication apparatuses connected via a communication circuit, comprising
a request processing means for inquiring to a designated communication apparatus whether it intends to attend multipoint communication when receiving information designating that communication apparatus and a request seeking the attendance of that designated communication apparatus in the multipoint communication and
a communication control means for controlling the multipoint communication among the plurality of communication apparatuses including the designated communication apparatus when receiving an answer from the designated communication apparatus to the effect of attending the multipoint communication.

2. A communication control apparatus as set forth in claim 1, wherein the request processing means notifies the communication apparatus issuing the request that it has received an answer from the designated communication apparatus to the effect of refusing to attend the multipoint communication when receiving the same.

3. A communication control apparatus as set forth in claim 2, wherein the request processing means notifies the communication apparatus issuing an answer to the effect of refusing to attend the multipoint communication of at least one of a state of said multipoint communication and content of the conversation at a predetermined timing.

4. A communication control apparatus as set forth in claim 3, wherein the request processing means notifies the apparatus when at least one of the attendants in the multipoint communication and content of communication changes.

5. A communication control apparatus as set forth in claim 1, wherein the request processing means sends information about at least one of the attendants in the multipoint communication, the content of the conversation, a charging method, and time to the designated communication apparatus when making the inquiry.

6. A communication control apparatus as set forth in claim 1, wherein the request processing means sends information necessary for the designated communication apparatus to attend the multipoint communication to the designated communication apparatus.

7. A communication control apparatus as set forth in claim 6, wherein the information necessary for attendance in the multipoint communication is information identifying the multipoint communication and a password.

8. A communication control apparatus as set forth in claim 1, wherein the communication control means controls data transmitted from the plurality of communication apparatuses engaged in the multipoint communication to be received by other communication apparatuses other than the communication apparatuses transmitting the data.

9. A communication control apparatus as set forth in claim 1, wherein
the request processing means inquires to the communication apparatus designated by a request whether it intends to attend the multipoint communication when receiving a request seeking opening of multipoint communication, and
the communication control means starts control of the multipoint communication by the plurality of communication apparatuses including the designated communication apparatus when receiving an answer from that communication apparatus to the effect that it will attend the multipoint communication.

10. A communication control apparatus as set forth in claim 1, wherein
the request processing means instructs the communication control means to break the connection of the multipoint communication when receiving a request seeking the same from a communication apparatus attending the multipoint communication, and
the communication control means controls the multipoint communication by the plurality of communication apparatus other than the communication apparatus requesting the disconnection from among the plurality of communication apparatuses attending the multipoint communication in response to the command from the request processing means.

11. A communication control apparatus as set forth in claim 10, wherein
said request processing means notifies the other communication apparatuses attending said multipoint communication that said communication apparatus has output a request for disconnection from said multipoint communication.

12. A communication control apparatus as set forth in claim 1, further comprising
a charge processing means for carrying out a charge processing on users of said communication apparatus for the service related to said multipoint communication.

13. A communication apparatus used for multipoint communication with other communication apparatuses connected via communication circuit, which
receives an inquiry as to if it intends to attend the multipoint communication together with information necessary to connect to the multipoint communication from the communication control apparatus controlling the multipoint communication and automatically accesses the communication control apparatus using the necessary information when receiving a command to the effect of attending the multipoint communication.

14. A communication apparatus as set forth in claim 13, which receives information identifying the multipoint communication and a password as the information necessary to connect to the multipoint communication and uses the same to automatically access the communication control apparatus.

15. A communication apparatus as set forth in claim 13, further comprising
an operating means by which said command to attend said multipoint communication is input.

16. A communication apparatus as set forth in claim 13, comprising
a display means for display based on image information sent from said communication control apparatus or said other communication apparatuses.

17. A communication apparatus as set forth in claim 13, comprising
a speech output means for speech output based on speech information transmitted from said communication control apparatus or said other communication apparatuses.

18. A communication control method for controlling multipoint communication conducted using a plurality of communication apparatuses connected via communication circuit, comprising
inquiring to a designated communication apparatus whether it intends to attend the multipoint communication when there is information designating a communication apparatus and a request seeking the designated communication apparatus to attend the multipoint communication and
controlling the multipoint communication among the plurality of communication apparatuses including the designated communication apparatus when the designated apparatus gives an answer to the effect of attending the multipoint communication.

19. A communication control method as set forth in claim 18, further comprising notifying the communication apparatus issuing the request that the designated communication apparatus has given an answer to the effect of refusing to attend the multipoint communication when that is the case.

20. A communication control method as set forth in claim 18, further comprising notifying said communication apparatus answering that it will not attend said multipoint communication of at least one of a state of said multipoint communication and content of conversation at a predetermined timing.

21. A communication control method as set forth in claim 20, further comprising providing said notification when at least one of the attendants of said multipoint communication and said content of conversation changes.

22. A communication control method as set forth in claim 18, further comprising sending information about at least one of the attendants, content of conversation, a charging method, and time of said multipoint communication to said designated communication apparatus when making said inquiry.

23. A communication control method as set forth in claim 18, further comprising sending information necessary for said designated communication apparatus to attend said multipoint communication to said designated communication apparatus.

24. A communication control method as set forth in claim 18, wherein
said communication control means controls data transmitted from the plurality of communication apparatuses engaging in said multipoint communication to be received by other communication apparatuses other than the communication apparatuses transmitting said data.

25. A communication control method as set forth in claim 18, further comprising
inquiring at a communication apparatus designated by a request for opening the multipoint communication whether it intends to attend said multipoint communication when receiving such a request and
starting control of the multipoint communication by the plurality of communication apparatuses including said designated communication apparatus when receiving an answer from said communication apparatus that it will attend said multipoint communication.

26. A provision medium for providing a program describing a routine for controlling multipoint communication conducted using a plurality of communication apparatuses connected via communication circuit, wherein the program describes
a routine for inquiring to a designated communication apparatus whether it intends to attend the multipoint communication when there is information designating that communication apparatus and a request seeking that the designated communication apparatus attend the multipoint communication and
a routine for controlling the multipoint communication among the plurality of communication apparatuses including the designated communication apparatus process when the designated communication apparatus gives an answer to the effect of attending the multipoint communication.

27. A provision medium as set forth in claim 26, wherein said program further describes
a routine for notifying said communication apparatus issuing the request that a designated communication apparatus has answered to the effect of refusing to attend said multipoint communication when there is such an apparatus.

28. A communication system comprising:
a communication circuit;
a plurality of terminal apparatuses each comprising at least a keyword input means for inputting a keyword and communicating with each other via the communication circuit so as to engage in multipoint communication; and
a server comprising a keyword extracting means for receiving data including a keyword input by a terminal apparatus and extracting the keyword from the received data, a user database in which user information is registered, a user extracting means for comparing a keyword extracted by the keyword extracting means with the user information registered in the user database and extracting at least one corresponding user, and a transmitting means for transmitting information about the multipoint communication to the users extracted by the user extracting means.

29. A communication system as set forth in claim 28, wherein
each terminal apparatus comprises a speech input means,
the keyword input means includes a speech input means, and
the keyword extracting means of the server includes a means for extracting a keyword from speech transmitted from the terminal apparatus.

30. A communication system as set forth in claim 29, wherein the keyword extracting means includes
a speech-text converting unit for converting speech to text;
a speech database for saving speech data converted in the speech-text converting unit; and
a keyword extracting unit for extracting a keyword based on speech data converted in the speech-text converting unit and data stored in the speech database.

31. A communication system as set forth in claim 30, wherein the speech-text converting unit stores in the speech database only the speech data relating to a predetermined portion instructed by the terminal apparatus.

32. A communication system as set forth in claim 30, wherein the speech-text converting unit counts the frequency of use of each word in the data converted to the text and stores the frequency of use and the word data in the speech database.

33. A communication system as set forth in claim 31, wherein the speech-text converting unit counts the frequency of use of each word in the data converted to the text and stores the frequency of use and the word data in the speech database.

34. A communication system as set forth in claim 32, wherein the speech-text converting unit counts the total number of words stored in the speech database and stores the words in the conversation and their frequency to an extent by which the total number of words does not exceed a predetermined range.

35. A communication system as set forth in claim 33, wherein the speech-text converting unit counts the total number of words stored in the speech database and stores the words in the conversation and their frequency to an extent by which the total number of words does not exceed a predetermined range.

36. A communication system as set forth in claim 34, wherein
the server further comprises a related word memory in which words related to keywords are registered and
the keyword extracting unit extracts a keyword based on a word related to the keyword registered in the related word memory in addition to the speech data and the data stored in the speech database when the total number of words does not exceed the predetermined range.

37. A communication system as set forth in claim 35, wherein
the server further comprises a related word memory in which words related to keywords are registered and
the keyword extracting unit extracts a keyword based on a word related to the keyword registered in the related word memory in addition to the speech data and the data stored in the speech database when the total number of words does not exceed the predetermined range.

38. A communication system as set forth in claim 36, wherein the keyword extracting means extracts word data having a high frequency of use from conversation data stored in the speech database when the total number of words exceeds the predetermined range, compares the extracted word data with the word data related to the keyword registered in the related word memory to extract at least one related word, and clears the speech database and the total number of words after extracting the related word.

39. A communication system as set forth in claim 37, wherein the keyword extracting means extracts word data having a high frequency of use from conversation data stored in the speech database when the total number of words exceeds the predetermined range, compares the extracted word data with the word data related to the keyword registered in the related word memory to extract at least one related word, and clears the speech database and the total number of words after extracting the related word.

40. A communication system as set forth in claim 28, wherein
the system further comprises an external control terminal connected to the server, and
the server receives as input only a keyword from the terminals attending the multipoint communication and particularly approved terminals not attending the multipoint communication or the external control terminal connected to the server.

41. A communication system as set forth in claim 28, wherein
the system further comprises an external control terminal connected to the server, and
terminals attending the multipoint communication and particularly approved terminals not attending the multipoint communication or the external control terminal connected to the server transmit to the server information for restricting other terminals sending information about the multipoint communication.

42. A communication system as set forth in claim 28, wherein the information about the multipoint communication includes at least one of a theme of multipoint communication, a number of attendants, a charging method, an access point, and a list of the attendants.

43. A communication method where a plurality of terminal apparatuses communicate with each other via communication circuit for multipoint communication, comprising
a step of receiving data including a keyword transmitted from a terminal apparatus and extracting the keyword from the received data;
a step of comparing the extracted keyword with previously registered user information and extracting at least one corresponding user; and
a step of transmitting information about the multipoint communication to the extracted user.

44. A communication method as set forth in claim 43, wherein the step for extracting the keyword extracts the keyword in speech sent from the terminal apparatus.

45. A communication method as set forth in claim 44, wherein the step for extracting the keyword is comprised of
a step of converting speech to text;
a step of storing the speech data converted to text; and
a step of extracting the keyword based on the converted speech data and the stored data.

46. A communication method as set forth in claim 45, wherein the step of storing the speech data stores only the speech data related to a predetermined portion instructed by the terminal apparatus.

47. A communication method as set forth in claim 45, wherein the step of storing the speech data counts the frequency of use for each word in the data converted to text and stores the frequency of use and word data.

48. A communication method as set forth in claim 46, wherein the step of storing the speech data counts the frequency of use for each word in the data converted to text and stores the frequency of use and word data.

49. A communication method as set forth in claim 47, wherein the step of storing the speech data counts the stored total number of words and stores the words in conversation and their frequency of use to an extent by which the total number of words does not exceed a predetermined range.

50. A communication method as set forth in claim 48, wherein the step of storing the speech data counts the stored total number of words and stores the words in conversation and their frequency of use to an extent by which the total number of words does not exceed a predetermined range.

51. A communication method as set forth in claim 49, wherein the step of extracting the keyword extracts a keyword based on a word related to the keyword registered in advance in addition to the converted speech data and the stored data when the total number of words does not exceed the predetermined range.

52. A communication method as set forth in claim 50, wherein the step of extracting the keyword extracts a keyword based on a word related to the keyword registered in advance in addition to the converted speech data and the stored data when the total number of words does not exceed the predetermined range.

53. A communication method as set forth in claim 50, wherein the step of extracting the keyword is comprised of
a step of extracting word data having a high frequency of use from stored conversation data when the total number of words exceeds the predetermined range,
a step of comparing the extracted word data with the word data related to the registered keyword to extract at least one related word, and
a step of clearing the stored speech data and the total number of words after extracting the related word.

54. A communication method as set forth in claim 52, wherein the step of extracting the keyword is comprised of
a step of extracting word data having a high frequency of use from stored conversation data when the total number of words exceeds the predetermined range,
a step of comparing the extracted word data with the word data related to the registered keyword to extract at least one related word, and
a step of clearing the stored speech data and the total number of words after extracting the related word.

55. A communication method as set forth in claim 43, further comprising inputting a keyword from a terminal attending the multipoint communication and a particularly approved terminal not attending the multipoint communication or an external control terminal connected to a server.

56. A communication method as set forth in claim 43, further comprising restricting the other terminals sending information about the multipoint communication by a terminal attending the multipoint communication and a particularly approved terminal not attending the multipoint communication or an external control terminal connected to a server.

57. A communication method as set forth in claim 43, wherein said information about the multipoint communication includes at least one of a theme of the multipoint communication, the number of the attendants, a charging method, an access point, and a list of the attendants.

58. A provision medium providing a program for making a computer execute
a step of receiving data including a keyword transmitted from a terminal apparatus engaged in multipoint communication by communicating through a communication circuit and extracting the keyword from the received data;
a step of comparing the extracted keyword with previously registered user information and extracting at least one corresponding user; and
a step of transmitting information about the multipoint communication to the extracted user.

59. A provision medium as set forth in claim 58, which provides a program wherein the step for extracting the keyword extracts the keyword in speech sent from the terminal apparatus.

60. A provision medium as set forth in claim 59, which provides a program where the step for extracting the keyword includes
a step of converting speech to text;
a step of storing the speech data converted to text; and
a step of extracting the keyword based on the converted speech data and the stored data.

61. A provision medium as set forth in claim 60, which provides a program where the step of storing the speech data stores only the speech data related to a predetermined portion instructed by the terminal apparatus.

62. A provision medium as set forth in claim 60, which provides a program where the step of storing the speech data counts the frequency of use for each word in the data converted to text and stores the frequency of use and word data.

63. A provision medium as set forth in claim 61, which provides a program where the step of storing the speech data counts the frequency of use for each word in the data converted to text and stores the frequency of use and word data.

64. A provision medium as set forth in claim 62, which provides a program where the step of storing the speech data counts the stored total number of words and stores the words in conversation and their frequency of use to an extent by which the total number of words does not exceed a predetermined range.

65. A provision medium as set forth in claim 63, which provides a program where the step of storing the speech data counts the stored total number of words and stores the words in conversation and their frequency of use to an extent by which the total number of words does not exceed a predetermined range.

66. A provision medium as set forth in claim 64, which provides a program where the step of extracting the keyword extracts a keyword based on a word related to the keyword registered in advance in addition to the converted speech data and the stored data when the total number of words does not exceed the predetermined range.

67. A provision medium as set forth in claim 65, which provides a program where the step of extracting the keyword extracts a keyword based on a word related to the keyword registered in advance in addition to the converted speech data and the stored data when the total number of words does not exceed the predetermined range.

68. A provision medium as set forth in claim 66, which provides a program where the step of extracting the keyword is comprised of
a step of extracting word data having a high frequency of use from stored conversation data when the total number of words exceeds the predetermined range,
a step of comparing the extracted word data with the word data related to the registered keyword to extract at least one related word, and
a step of clearing the stored speech data and the total number of words after extracting the related word.

69. A provision medium as set forth in claim 67, which provides a program where the step of extracting the keyword is comprised of
a step of extracting word data having a high frequency of use from stored conversation data when the total number of words exceeds the predetermined range,
a step of comparing the extracted word data with the word data related to the registered keyword to extract at least one related word, and
a step of clearing the stored speech data and the total number of words after extracting the related word.
